# EUROPEAN PATENT APPLICATION

(11) **EP 4 239 552 A1**
(43) Date of publication of application: **06.09.2023**
(21) Application number: 22212826.6
(22) Date of filing: 27.07.2012
(51) Int. Cl.: G06Q 10/10, G06Q 50/18

(54) **SYSTEMS AND METHODS FOR NETWORK-BASED ISSUE RESOLUTION**

(62) Divisional of application: 12881587.5
(71) Applicant: Ask America, Inc., San Francisco, California 94147 (US)
(72) Inventor: Tozzi, Christine Margaret, San Francisco (US)
(74) Representative: Barker Brettell LLP

(57) **Abstract**

A computerized Internet web server/browser method of mediating disputed issues. Here a semi-anonymous mediation network, optionally linked to a pre-existing social network, containing various members interested in providing disputes to mediate and mediating these disputes, is created. Members may post disputes according to various issue types, have these disputes analyzed and commented on by other members, who will then receive feedback according to the success of their analysis. The system keeps track of member expertise in resolving these disputes, thus determining which members have better track records at resolving various types of problems. The system additionally may contain various analytical and graphical tools to enable members to analyze mediation responses according to the characteristics of the response givers. Members may additionally post general questions to other members and receive responses. Certain data may be shared with advertisers, who may post ads relevant to the disputed issues.

## Description

### BACKGROUND

### Cross-Reference to Related Application

This invention is related to U.S. Patent Application No. 13/016,597, entitled "Computerized Method of Mediating Disputed Issues" and filed January 28, 2011, the entirety of which is hereby incorporated herein by reference.

### Field of the invention

The invention is generally directed to social networks, and, more particularly, to a network-based platform for online mediation, advice-giving and receiving, and conflict resolution/self-improvement.

### Description of the Related Art

Disputes regarding various issues between individuals are a constant part of everyday life. These disputes can range from minor to very serious. At one end of the spectrum, they can be simple domestic arguments about the division of chores in living arrangements, minor relationship issues, and the like. More serious disputes may comprise automobile repair problems, automobile accidents, and the like. Even more serious disputes may involve civil torts, breaches of contracts, and the like. In addition, in their daily lives, individuals are often faced with a series of dilemmas or options that they must consider and decide upon. These dilemmas and options may be made more successfully and with better outcomes if these individuals had the benefit of collective feedback and/or a consensus from a diverse group of other individuals. The ability to describe dilemmas and options anonymously to an anonymous group of individuals could provide even greater clarity. Furthermore, many businesses and community groups wish to understand the opinions and preferences of current, past, or potential users and customers, but are limited in how broadly they can reach these audiences.

At present, there is no fully satisfactory method to handle many of these issues, disputes, dilemmas, or extensive opinion-gathering requirements. (Note that a dispute or dilemma will generally be composed of issues, and will generally have at least one issue, but may often comprise multiple issues). Some problems, such as non-serious domestic arguments and minor relationship issues, are too small for the legal system to handle at all. Other problems, such as small claims lawsuits (often involving cash amounts, e.g., under $5,000 or $7,500) can be handled by small claims courts, and more serious tort or breach of contract problems can be handled by superior courts. However, the court process can be cumbersome. At a minimum, the parties must often hire attorneys, pay fees, and/or physically travel to the courthouse, where they may have to wait for a considerable length of time before the trial commences. If the trial involves a jury, the process is even more laborious, since the various jury members have to be summoned, physically travel to the court, and also wait, with a considerable loss in time and effort. Although alternatives to the court system, such as private mediation services exist (e.g., conducted by retired judges), such systems are also generally quite cumbersome, often involving physical travel and a substantial amount of expense.

In addition, there is currently no way for people to seek opinions and/or advice from a large and diverse set of independent and unrelated people on an anonymous basis, as there is no central online community which currently provides such a forum. Similarly, there is currently no means for businesses, communities, or other groups to seek preferences and opinions from a large, independent, anonymous, and broad group of individuals online, as current opinions today are limited to specific websites or methods that target users who are identified and not anonymous, or who are already affiliated with more customized databases. A universal and well-known platform for collecting preferences and opinions on an anonymous basis is not yet in existence.

### SUMMARY

What is needed is a simple, low cost, preferably Internet-based, system or method that: (1) has the ability to poll the public and handle many of the issues and disputes that are presently too minor for the legal system to recognize; (2) scale up to handle issues presently being handled by small claims courts, superior courts, and the like; and/or (3) provide an online community for the purposes of handling disputes, giving and receiving opinions, asking and providing preferences for individuals, groups, businesses, special interests, communities, and the like.

Accordingly, in an embodiment a method for network-based issue resolution is disclosed. The method comprises receiving from a user a selection of a type of audience from a plurality of types of audiences; receiving a definition of an issue; identifying one or more audience members corresponding to the selected type of audience; providing the definition of the issue to the one or more audience members; receiving one or more responses from the one or more audience members; and determining a resolution for the issue based on the one or more responses.

In an additional embodiment, a system for network-based issue resolution is disclosed. The system comprises at least one hardware processor; and at least one executable software module that, when executed by the at least one hardware processor, receives from a user a selection of a type of audience from a plurality of types of audiences, receives a definition of an issue, identifies one or more audience members corresponding to the selected type of audience, provides the definition of the issue to the one or more audience members, receives one or more responses from the one or more audience members, and determines a resolution for the issue based on the one or more responses.

In an alternative embodiment, a computerized Internet web server/browser method of mediating disputed issues is disclosed. The method may comprise the creation of a semi-anonymous mediation network, optionally linked to a pre-existing social network, and comprising various members interested in providing disputes to mediate and mediating those disputes. Members may post disputes according to various issue types, and have these disputes analyzed and commented on by other members, who will then receive feedback according to the success of their analysis. The system may keep track of member expertise in resolving these disputes, thereby determining which members have better track records at resolving various types of problems. Additionally, the system may comprise various analytical and graphical tools to enable members to analyze mediation responses according to the characteristics of the response-givers. Members may additionally post general questions to other members and receive responses. Certain data may be shared with advertisers, who may post advertisements relevant to the disputed issues. In addition, the system may allow businesses, community groups, special interest groups, and the like to use the site to seek anonymous opinions, obtain preferences, or conduct market research that is of interest to them.

### BRIEF DESCRIPTION OF THE DRAWINGS

Fig. 1 illustrates an overview of an opinion and/or mediation system, according to an embodiment;
Fig. 2 illustrates an example dispute resolution using an opinion and/or mediation system, according to an embodiment;
Fig. 3 illustrates an example user interface for defining an issue for an opinion and/or mediation system, according to an embodiment;
Fig. 4 illustrates an example dispute resolution using an opinion and/or mediation system, according to an embodiment;
Fig. 5 illustrates an example method for issue resolution, according to an embodiment;
Fig. 6 illustrates an example method for defining an issue, according to an embodiment;
Fig. 7 illustrates an example method for defining a dispute-based issue, according to an embodiment;
Fig. 8 illustrates a processing system on which one or more of the processes described herein may be executed, according to an embodiment; and
Fig. 9 illustrates an issue resolution system, according to an embodiment.

### DETAILED DESCRIPTION

In an embodiment, a system and method for implementing and managing an online opinion and/or mediation network is disclosed. For example, the system may provide an online forum where users can virtually meet and/or communicate to obtain opinions or feedback regarding issues of concern, interest, curiosity, and the like, including but not limited to disputes, decisions, current events, dilemmas, preferences, etc. In some instances, the feedback may allow a user to gain greater insight into how best to resolve or handle an issue. The system may also allow users to share their learning, life experience, and wisdom with other users. The system may provide users with data and insights about themselves based on how they have communicated an issue, how they have acted on the feedback given to them, and/or how they have given opinions or feedback to other users.

### Definitions

As used herein, the term "user" refers to any entity (e.g., a person, a business, a community or community group, software modules, hardware devices, etc.) which utilizes one or more aspects of the disclosed systems and methods. A "member" is a user which has registered with the system by completing specified requirements, such as establishing authentication information (e.g., username and password, email address and password, a digital certificate, and/or a fixed Internet Protocol (IP) address). Registration may be through a third-party application or website, such as Facebook^{™}, Google^{™}, and the like. Where registration is through a third-party application, the system may utilize an application programming interface (API), such as Facebook Connect^{™}, which allows the system to authenticate itself with the third-party application and receive or query information about a user who has registered and authenticated with the third-party application (and, either implicitly or explicitly, given permission for the system to access the information). For example, this information may include personal information (e.g., name, location, date of birth, interests, contact information), relationship information (e.g., family, friends, contacts, social groups), media (e.g., photographs, videos) posts related to the user (e.g., Facebook^{®} Wall posts, Twitter^{®} posts), and/or any other available information.

As used herein, the term "issue" may refer to anything capable of being described and commented upon or responded to. An issue will frequently be described herein as a dispute, akin to a legal dispute, in which there may be two or more sides. However, the disclosed systems and methods are not limited to dispute-based and legal issues. Rather, the system may be used to obtain a response or responses to any issue or query. For example, the issue may take the form of a "Dear Abby" letter, in which a user describes a problem, such as troubled relationship, and asks for an opinion on how to resolve the problem, such as whether the user should end the relationship or continue with the relationship, and if the user should continue with the relationship, what steps should be taken to repair the relationship. This is but one, simple example. It should be understood that the disclosed systems and methods are capable of handling an infinite number of different types of issues. Special interest groups may seek to use the system to get a response, solve a conflict, or gain preferences within a subset of members that affiliate with such groups. It should also be understood that the issues do not necessarily comprise problems. For instance, as another simple, non-limiting example, the system may be used as a polling mechanism. For example, the issue may comprise one or more multiple choice questions, each comprising a question and two or more options for responding to the question. In this manner, the system could be utilized to obtain public opinion about topics of interest, such as current events. An issue can also be referred to as a "story," which could be one-sided or multi-sided.

As used herein, the terms "collaboration," "collaborate," "collaborative," or other variations thereof, refer to an issue involving multiple users, in either an adversarial or non-adversarial context. The term "participant" or "participants" will primarily be used herein to refer to the users involved in the collaboration (e.g., parties to a dispute, users working together to define an issue for a focus group). In an embodiment, the system may require that these participants be or become members in order to collaborate on an issue. Generally, an issue may comprise one or more elements (e.g., title, description, questions, evidence, statements, options, answers, parameters, witness identifications). Collaboration may comprise participants creating or editing the same elements, different elements, and/or opposing elements (e.g., plaintiff v. defendant), in either a serial, version-controlled, and/or simultaneous, real-time manner.

As used herein, the term "public" refers to other users of the system. The term may refer to a subset of all users of the system, such as members (i.e., registered users) or a subset of members satisfying specified criteria (e.g., age, location, status, interests, experience). The term "jury" refers to a panel comprising a bounded number of users (e.g., twelve users). These users may be members who have attained a particular status, such as a "juror" status, by meeting certain criteria (e.g., experience or expertise level, high feedback ratings, activity level on the system such as a number of responses submitted, or by virtue of being a private judge or other legal professional). These criteria may be specific to categories of issues. For example, a user may attain juror status for one type of issue (e.g., property disputes) but not for another type of issue (e.g., science-based opinions). The term "judge" refers to a user or third-party which the system has recognized as having a particular status. The "judge" status may be, but need not be, related to the "juror" status. For example, the judge status may be attained by meeting more difficult criteria than are required for the "juror" status (e.g., a higher experience or expertise level, higher feedback rating, higher activity level). Alternatively or additionally, "judge" status may be held by professionals with whom an operator of the system has contracted for their services. For example, these individuals may be current or retired judges, private judges, lawyers, professional mediators, and the like.

In an embodiment, judges may be selected from a directory of available or qualified individuals. Alternatively or by default, a judge may be assigned to the case by the system (e.g., randomly, by a round robin method, by case load, by expertise, etc.). In an embodiment, participants may be allowed to select one judge or a panel of judges (e.g., three judges) to decide a case, as moderators to help summarize issues, and/or to guide the decisions of a selected jury. These selections can also have varying price levels, for example, based on experience. Thus, more experienced professional may cost more.

The term "audience" will be used herein to refer to any collection of users, including the public, a jury, a judge, and a panel of judges, which are selected to aid in or decide the resolution of an issue. Audience members may be selected from a database of members locally or remotely accessible by the system. It should be understood that the types of audiences described herein are merely illustrative of the types of audiences that can be offered by the system. More or fewer types of audiences can be offered and combinations of different types of audiences may be grouped together as a single audience (e.g., a single audience comprising both a judge and a jury). It should also be understood that any audience may be used for any type of issue. For example, while a jury can be used to for formal or informal mediation of a dispute, it can also be used for any other type of issue as well. As but one illustrative, non-limiting example, a jury can be used to act much like a focus group would (e.g., to evaluate a product).

As used herein, the term "resolution" refers to an outcome of an issue. The resolution may comprise one or more of a response, a vote, an opinion, a preference, a recommendation, a verdict, a judgment, a decision, a result, or any other possible outcome related to an issue. As a simple example, if the issue is a dispute, the resolution may be a winner of the dispute, as voted on by one or more users. In some instances there may be more than one resolution. For example, if a resolution, as decided by an audience, is non-binding, the ultimate resolution attained by the parties to an issue may be different than the audience-selected resolution.

### System Overview

As previously discussed, the current, formal legal system for mediating disputes is expensive and slow. It is also relatively "toxic," in that it may foster continued disputes and ill-will. By contrast, the disclosed systems and methods may provide a quicker, less expensive, and less toxic alternative to legal and current alternative dispute resolution systems, at least with regards to various small claims issues, and various civil issues that are open to mediation-based processes. The system can also be utilized for purposes other than dispute resolution, such as advice getting and receiving, polling, and surveys. In addition, by providing a continual and broad range of potentially interesting issues to monitor, opine on, and/or mediate, the system may provide considerable entertainment value.

Although the system may, in embodiments, act as an alternative to small claims court or civil court for various disputes, alternatively or additionally, the system may also serve as a convenient forum for conveying advice or feedback on a variety of non-legal related issues. For example, a member may login to the mediation network and solicit advice on relationship issues in a "Dear Abby" or "Mrs. Manners" online analog from an audience of one or more members (e.g., the public, a selected or assigned panel, a jury, a judge, etc.). As a simple example, the submitting member may describe a problem that may have occurred on a recent ski trip taken with friends, upload additional information - e.g. descriptions of the trip and hotels, descriptions of the friends, and so on - and then request non-legal feedback from an audience composed of other members in the form of either checkbox or radio button responses (e.g. "friends should not have gone on the trip", "friends should have gone, get over it", and so on), or as text responses. The submitting member may also set the system to collect responses over a set period of time (e.g., one week), or for a set number of responses (e.g., 100 responses) before closing the issue. Users can post these advice-getting dilemmas on either an anonymous basis by creating a "screen name" or other alias, or can post as themselves. Users can continue to get additional advice by linking a new story to a previous story that was created under the same screen name or real name, such that the members may conveniently obtain a complete historical picture before responding.

The ability to post not only anonymously, but using multiple anonymous identities or aliases, coupled with the ability to link or not link to other stories provided tremendous flexibility to gather information and view point to the user. For example, by linking a new story or issue to prior stories/issues, the audience can start to learn more about the user, i.e., what type of issue the are having; whether there are themes running through the issues, i.e., the user is always playing the victim, or is always heavy handed, etc.; whether the user accepts or rejects advise, follows good or bad advice; etc. This type of information can then help the audience to be more informed and can influence their advice, which may be helpful to the user. On the other hand, the user may not want the audience to be influenced by such past events and therefore may prefer to post the new story/issue without links to past issues or even under a new alias so that the audience will have no way to associate the new post with any old ones. In fact, the user could even post the same story/issue under one alias, e.g., with links to old posts, and under a new alias with no tie to the old posts. In this manner the user can see how the advice differs and what the different advice may say about them or the situation.

Thus, these features do more than provide anonymity; they allow the user to get potentially different advice. When further combined with the analytic tools available to break down information on audience feedback, this can provide more layered analytics and even more powerful data. The analytic tools are described in more detail below.

As yet another example, the system may also function to keep its members entertained by allowing users to put up random questions with multiple choice answers, as well as collecting and displaying statistics on the resulting answers. Users additionally may be able to search for mediation or other issue participation opportunities by category or case number (e.g., a friend may refer an interesting case number or link for review) for purposes of entertainment as well. The site may be marketed on billboards, banner advertisements, and through other forums, for example, by highlighting interesting issues, and encouraging viewers to submit their opinions. In an embodiment, rather than having to search for content, users who visit the platform may see a scrolling list of stories for their review and comment. They may sort by category to reveal only those stories that have been posted in that category. Links to stories can be posted on Facebook^{™}, Google+^{™}, and the like, emailed to people, and/or distributed using other methods of distributing interesting content to people.

In certain embodiment, the system can ensure or provide anonymity to all users involved. However, the system may collect and/or generate valuable data, such as types of disputes (e.g. property damage, such as vehicular damage), location of disputes (e.g., zip codes), etc., that would potentially be highly valuable for advertising (e.g., body shops within the zip code of a dispute) and/or research purposes (e.g., zip codes having the highest property damage). In addition, personality and demographic data can be collected and/or generated for users of the system for their self-awareness or other purposes, and which can also be used for advertising and/or research purposes. To ensure privacy, this information may be "anonymized," i.e., scrubbed of information that could be used to identify particular users.

At a high level the system may allow a user to engage in one or more types of processes in order to obtain a resolution. The processes may comprise one or more software and/or hardware modules executing on one or more computing devices. For example, in one embodiment, the processes comprise software modules, comprising instructions, which are executed on one or more hardware processors of a web server or a plurality of web servers. The web server(s) may host a website and/or a web service, according to the instructions embodied in the software modules. Alternatively or additionally, the software modules may be executed by one or more cloud instances.

In embodiments in which a website is provided, the website may comprise one or more user interfaces, including, for example, webpages generated in HyperText Markup Language (HTML). The server transmits or serves these user interfaces in response to requests from client devices. The responses, including the user interfaces, and the requests may both be communicated through one or more networks, which may include the Internet, using standard communication protocols, such as Hypertext Transfer Protocol (HTTP) and/or secure HTTP (HTTPS). It should be understood that these user interfaces or webpages may comprise a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like. The server may also respond to other requests from the client devices. For example, a client device may submit data (e.g., user data, form data, etc.) to be stored in one or more databases locally and/or remotely accessible to the server. Such data may be sent to the server, for instance, using the well-known POST request supported by HTTP. This data may be handled, for example, by a servlet.

In embodiments in which a web service is provided, the server may receive requests from client devices, and provide responses in eXtensible Markup Language (XML) and/or another suitable format. In such embodiments, the server may provide an application programming interface (API) which defines the manner in which client devices may interact with the web service. Thus, the client devices, which may themselves be servers, can define their own user interfaces, and rely on the web service to implement the backend processes, functionality, storage, etc., described herein.

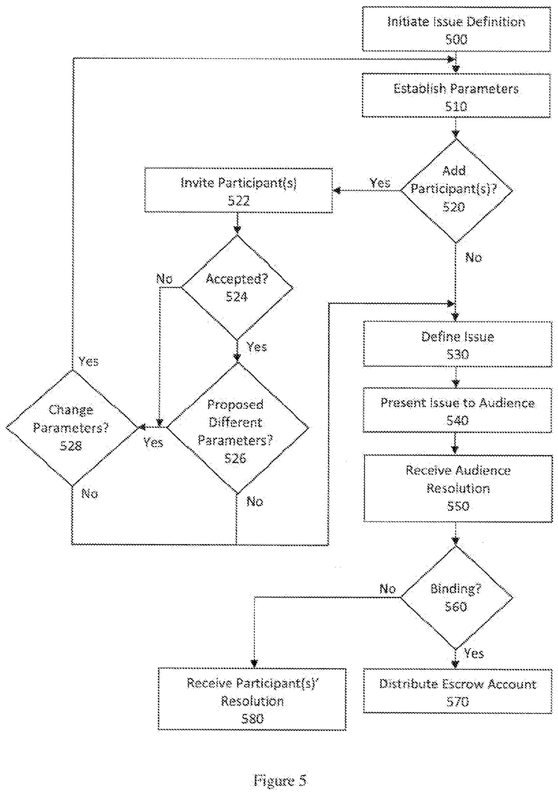

With reference to Fig. 5, a user of the system may submit an issue for consideration, for example, using a user interface served by a server over a network (e.g., Internet) and displayed by a browser application of a client device. In step 500, the user initiates the definition of an issue. This user may be referred to herein as the "originating user" or "author." The user may be prompted to provide an alias (e.g., username or screen name), or one of many aliases, to be associated with the issue, in order to identify the user without identifying any personal information about the user. The system may suggest an alias (e.g., randomly-generated alias) to be used by the user, either automatically or in response to a user interaction. As noted above, a user may also have the option of using an alias that was previously utilized (e.g., with respect to a prior issue) or input (e.g., at registration) by the user. In an embodiment, the user may choose to use a different alias for different issues, including, for example, a different alias for each issue in which the user participates. The use of such an alias may be optional, such that the user may choose to use his or her real identity if desired. By default, the user's username (e.g., for authentication purposes), real name, previously utilized alias, or a general or randomly-generated alias may be used.

In an embodiment, parameters are established by the user or system in step 510. The parameters may comprise a plurality of different characteristics or attributes related to the issue, such as a category, a title, a selection of an audience, timeframes related to the issue (e.g., participation acceptance deadline, question submission deadline, evidence submission deadline, witness invitation deadline, witness response deadline, presentation deadline, resolution deadline), whether or not a resolution decided by the audience is binding, what constitutes a majority of the audience, an escrow account, and the like. The user may be provided with inputs (e.g., a text area, textboxes, drop-downs, checkboxes, radio buttons, etc.) to describe his or her issue.

As a non-limiting example, in step 510, the user may select an audience. As described above, exemplary audiences include the public, a jury, and a judge or panel of judges. In an embodiment, the user may select an audience comprising a subset of potential audience members (e.g., a pool of users having a regular status, a "juror" status, or a "judge" status). For example, the user may select or identify criteria which other users must satisfy in order to be considered as audience members. Such criteria may include demographic information (e.g., age, race, location, gender), profile information (e.g., interests, hobbies, political affiliations, experience or expertise in a given area, level of activity on the system), personality information (e.g., compassionate, angry, liberal, conservative, sense of humor), and the like. Only those users who meet the specified criteria may be able to respond to, or even view, the issue. It should be understood that, in embodiments in which the "juror" and "judge" status are earned statuses, these statuses can simply be treated as one of the selectable or identifiable criteria.

It should be noted that in the public example, a goal is to allow the user to grow and learn. Thus, in many embodiments, the user would not limit the audience when selecting a public option for the audience. Rather, if the user wanted to be able to see how select groups, i.e., groups defined by demographic or psychographic data, responded, then the user can analyze the analytic data make such determinations. Thus, in a simple example, the user can see how women responded versus men, how people above a certain age responded versus younger respondents, how more sympathetic audience members responded versus more unsympathetic audience embers, etc. Again, the analytics are described in more detail below.

As an additional non-limiting example, in step 510, the user may select a category by clicking on a general topic or category (e.g., social, relationship, political, historical, developer, work, neighbors, religion, romance, sports, travel, real estate, in-laws, headlines, product sales), and optionally select from various sub-categories. For example, under a general real estate topic, the sub-topics may comprise landlords, tenants, property taxes, insurance, and the like. Similarly a broad relationships topic might be further subdivided into various sub topics such as marriage, divorce, living together, friends, children, and so on. Alternatively or additionally, the user may specify his or her own custom category, for example, if no satisfactory preset category exists. These user-defined categories may be reviewed by administrative personnel, who may accept or reject the category, and optionally add the category as a preset category or sub-category. Additionally or alternatively, in step 510, the use may select an issue type, such as solo v. collaborative, advice, mediation, opinion, small claims dispute (e.g., money amounts under a certain limit such as $5,000 or $7,500), civil tort, and so on.

As another non-limiting example, in step 510, the user may input a time for keeping the issue open or active. For example, the time may be entered as an expiration date and/or as a duration (e.g., number of days and/or hours, etc.). Additionally or alternatively to an expiration, the user may enter a number of responses. Once the time has expired or the number of responses has been met, no further responses may be counted, the issue may be closed or tentatively closed pending the entry of a final resolution, and/or some other action may be triggered. In some embodiments, the user may be restricted to only having a predetermined number of issues open or tentatively closed at one time. If the user attempts to add a new issue which will cause the user to exceed the allowable number of open issues, the user may be prompted to close one or more of the open issues before adding the new issue. For instance, closing the issue may require that the originating user input the final resolution, i.e., whether the resolution decided upon by the audience was followed or not. If the resolution was followed, the user may also be required to indicate feedback, such as whether or not the user was happy with the resolution. If the resolution was not followed, the user may be required to specify why the resolution was not followed and/or a description of the resolution chosen by the user. This data can be used in the creation of a personality profile. It can also be made publicly viewable by other members who want to follow-up on cases on which they provided feedback. Such members may be interesting in seeing if their feedback was taken, how it compared to how others responded, and/or how successfully the issue was resolved.

At step 510, the user may also be given the option to link the issue to a previous issue or previous issues. In some embodiments, the user may only be allowed to link to an issue in which the user previously participated. The alias used by the user in the previous issue may be carried through to the linked issue as well, and the previous issue or issues may be made public, if not already, as part of the issue.

In an embodiment, if the user has made a Judge or Jury selection, then the user may choose whether to have an "open courtroom" or "closed courtroom." In an open courtroom, the public may be permitted to view the elements or a subset of elements of the issue. In a closed courtroom, the public may not have access to any elements of the issue.

As a further non-limiting example, in step 510, the user may specify whether or not the issue involves multiple parties, either in an adversarial or non-adversarial context. In the event that an issue does involve multiple parties, the user may identify the other parties (e.g., by email address, username, etc.). These other parties may or may not already be users or members of the system. In step 520, the system determines whether the user has identified other parties. If so, at step 522, the system invites the identified parties to participate in developing or defining the issue. The invitations may comprise emails, text messages, or other communications to the identified parties. The communications may comprise a message (e.g., instructions) and a Uniform Resource Locator (URL) or other reference or input, which the invitee can select or interact with to accept the invitation. The invitee may also be given the option of declining the invitation. The originating user or the system may also associate the invitations, either individually or generally, with an expiration time or duration for acceptance. If an invitee fails to accept the invitation by the specified time or within the specified duration, the invitation will be treated as if declined. The user may also specify permissions for the invitees, either individually or in one or more groups, such as the ability to edit one or more elements of an issue, cancel an issue, add elements to the issue, view reports related to the issue, and the like.

In some embodiments, the system may run a survey section in which system members are invited to give their opinions on a variety of different personal and social issues. The system may further capture a record of the responses of various individual system members, and match these responses to an individual system member's personality profile according to one or more matching algorithms. As an example, individual users may be assigned parameters that relate to the user's tendency to be liberal or conservative, forgiving or unforgiving, introverted or extroverted, interested in others or disinterested in others, and the like. This individual user profile may, in turn, be used to help define which participants are appropriate to help vote on a particular issue or to group participants for further analysis by the user. For example, when there is an issue between two conservative participants either by system judgment or self-assessment parties, these parties may prefer to draw upon members who are also more conservative. Similarly, in an issue between two liberal parties, these parties may prefer to draw upon members who are more liberal. Split conservative or liberal parties may prefer a split set of members, and so on. In this manner, the audience can be customized by the parties based on personality profiles.

Again, however, in order to learn, conservative participants, for example, may wish to see how they, or their issues, are being viewed by more liberal audience members. Thus, the analytics, e.g., algorithms, pattern matching, word and text analysis, etc., used to build up the personality profiles are important tools that allow a user or member to break down the responses by audience member traits and demographics to hopefully gain more enlightenment than just the raw advice.

When story questions and responses are used to assist in determining an individual system member's personality profile, methods may be used, such as those disclosed in U.S. Patent No. 6,735,568 to Buckwalter et al., which is hereby incorporated herein by reference, and which may be adjusted for non-relationship-type compatibility. In an embodiment, a key feature of the disclosed system may be that the personality profile is based on algorithms that interpret the meaning behind posted issues. For instance, the algorithms may interpret the meaning behind the phrases used, the questions a member poses to other members, the options available for members to respond, how the member takes or does not take a consensus opinion, and the like. In lieu of direct questions to assess a member's personality, his or her actions, responses, and interactions on the system, both in his or her own postings and in responses to others' postings, are analyzed to build the member's personality profile. Other algorithms may also be used. The personality profile may change over time as more data is analyzed by the algorithms, so that members can track their progress towards meeting certain personality characteristics. For example, a member who is labeled as stubborn, based on algorithms that are interpreting the member's interactions with the system, might see this characteristic soften over time, if the member changes how he or she responds to other members' issues and/or how they accept feedback, etc.

In an embodiment, in order to accept an invitation, the invitee must have previously registered or else currently register to become a member with the system (or, as discussed above, access the system using a third-party application, such as Facebook^{™}). If an invitee accepts an invitation in step 524, the invitee may propose different parameters for the issue, as illustrated by step 526. As discussed above, these parameters may comprise, for example, audience selection, timeframes, whether or not the audience's resolution will be binding, additional or fewer participants, and the like. In step 528, the originating user may choose to accept the invitee's proposed changes, make a counter-proposal, or reject the invitee's proposed changes.

In an embodiment in which the issue is a dispute, instead of or in addition to accepting or rejecting the invitation to participate in the issue, the invitee may propose a settlement. The system may provide a negotiation interface (e.g., a chat room, bidding interface), whereby the originating user and the invitee may propose settlements and/or counter-settlements until a final settlement is agreed upon or an impasse is reached. In the case that no settlement can be agreed upon, the originating user and the invitee may proceed with the process (e.g., by defining the issue in step 530). To this end, the deadline for accepting the invitation may be tolled during the negotiation process. In an additional embodiment, the invitee may also propose a change in the deadline for accepting the invitation. This may be useful if the invitee desires more time to decide whether or not to participate in the process.

In step 524, if an invitee declines an invitation (either initially or after a proposal has been rejected) or the time for acceptance expires, the originating user may be asked to choose an alternative process. For example, if the issue is a dispute and the originating user initially selected a jury-based or judge-based process, it may not be worthwhile for the user to proceed with the jury or judge if the other parties to the dispute declined to participate. In this case, the system may prompt the originating user as to whether he or she would like to select the public as the audience instead. Whether or not the user modifies any of the parameters associated with the issue, and even if no invitees accept the invitation to participate in the issue, the originating user may still proceed to defining the issue in step 530.

In step 530, the originating user and the invitees, if any, who have accepted the invitation to participate in the issue can collaboratively define the issue. It should be understood that, in the same manner that the originating user was able to use an alias, the other participants in the issue may also choose to use aliases in order to maintain their anonymity. Each participant may be permitted to modify or propose modifications to the defining elements of the issue, as permitted by the permissions, if any, set by the originating user. The elements or issue may be version controlled or time controlled, and only one user may be permitted to edit the elements or issue at a time. Alternatively, each participant may correspond to different elements (e.g., plaintiff elements and defendant elements), which are maintained and can be modified separately from each other. Which alternative is used may be based on the context (e.g., adversarial or non-adversarial) and/or a parameter selection in step 510.

The process for defining the issue may vary depending on the context of the issue and/or the parameters established in step 510. At a base level, the process may simply involve inputting a description, one or more questions, and optionally two or more options (i.e., possible responses) to each of the questions. However, users may be given the option to define issues with varying degrees of complexity. For instance, if a jury-based or judge-based process is selected, if the issue type is defined as a dispute, and/or if the participants specifically select a more involved process, then the definition of the issue may be more complex, including, for instance, opening and closing statements, evidence, and witnesses. Such processes will be described in more detail below.

Once an issue has been defined to the satisfaction of the participant(s), the participant(s) may choose to preview the issue, as well as publish the issue. In an embodiment, a timeframe for modifying the issue may be specified by as one of the parameters associated with the issue. Once the timeframe has expired, no further editing may take place, and the issue may be automatically published. Once the issue has been published, it is presented to or viewable by the selected audience in step 540.

The issue may be posted and available on the homepage or other page of a website served by a web server of the system or otherwise associated with the system. The issue may be indexed and searchable and/or filterable based on keywords, times of submission, times of expiration, and/or any other criteria. The participants in the issue may share or publish the issue on available social networks (e.g., Facebook^{™}, Google+^{™}, etc.), for instance, by interacting with the system (e.g., by selecting a link or input) which, in turn, interfaces with the social networks via one or more APIs.

In an embodiment, the system generates an identification number to uniquely identify the issue and/or a URL to provide a reference to the details of the issue and/or a user interface which accepts responses to the issue. The URL may be shared via email message, text message, website postings, and the like. As is well understood, the data related to the issues managed by the system may be protected by appropriate permissions and cryptography methods. The system may also have many other options as well, such as access to libraries (e.g., legal libraries), where members may research various topics of interest that may be related to their issues.

Once the issue has been published, in step 550, the audience members may view the defined elements of the issue and respond to the issue. For example, if the issue comprises a question, the members may respond with textual answers (e.g., through a textbox of a user interface). If the issue comprises a question with a set of selectable options, the members may respond by selecting an option or options (e.g., using a radio button or drop-down of a user interface). If the issue comprises a dispute, the responses may comprise a vote on an outcome (e.g., a winner, an apportionment of property, an assignment of liability). It should be understood that, in some embodiments, these responses may include other data, such as file attachments and the like. In an embodiment, the participants may post comments on the issue and view the audience responses or voting as the process progresses.

Once all responses have been received, a predetermined number of responses have been received, or the issue has expired, the issue is closed or tentatively closed, and a resolution is determined based on the responses. For instance, the outcomes proposed by, or the votes included in, the responses can be tabulated to determine the resolution, if any. As discussed above, the parameters selected or identified by the participant(s) may comprise an identification of what constitutes a majority. This may be represented as a percentage, a ratio, a fixed number, or some other value, and may represent a simple majority (e.g., 51%), unanimity (i.e., 100%), or something in between the two (e.g., 66%). For issues in which multiple outcomes are possible, the resolution may be determined as the outcome receiving the most votes relative to the other possible outcomes. In this case, there may not be a majority, since the outcome with the most votes may have fewer than 50% of the votes.

In an embodiment, the originating user and/or other participants of an issue who may cancel the issue prematurely, and optionally even after it has been published. However, the system may require the cancelling user to provide or select an explanation of why the issue was canceled.

In step 560, after the resolution has been determined, the process determines whether the resolution is binding or not. This determination may be based, for example, on the parameters specified or identified by the participants in step 510. If the resolution is binding, in step 570, the system or an operator of the system can distribute or initiate (e.g., by transmitting a request to a third-party application) the distribution of any escrowed property. For example, in step 510, an escrow account may have been established or identified. One or more participants may have deposited money or other property into the escrow account. This property may represent a damages amount, bond amount, and/or the like. The escrow account may be provided and maintained by the system or by a third party, such as an affiliate or partner of the system (e.g., an associated financial institution).

After the resolution has been determined, this property may be distributed according to the resolution. Distribution may entail delivery or transfer of the property to one or more participant(s), delivery or transfer to a third party, disposal of the property, and the like. In some embodiments, which entail or allow for an appeals process, the escrowed property may not be distributed until after all appeals are exhausted or an appeal period has expired.

In step 560, if it is determined that the resolution is not binding, the issue may remain open, or be only tentatively closed, until one or more of the participants inputs a final resolution in step 580. This final resolution may or may not correspond to the resolution chosen by the audience. In this manner, the system is able to capture whether or not the audience resolution matched the actual resolution of the issue. This data may be used in the personality profile algorithm(s) and market research features of the platform. As discussed above, each user may be limited to a preset maximum number (e.g., two) of open or tentatively closed issues at any given time. The maximum number may be fixed, or may be adjusted and vary, according to the experience level or status of the user. In some embodiments, a user may be able to purchase or otherwise earn the ability to maintain an additional number of open issues above a preset default number.

Regardless of whether or not the resolution is binding, the system may prompt the participant(s) to indicate whether or not they were happy with the outcome of the audience resolution. For example, the resolution may comprise a selection such as "I/we took the advice and were pleased with the results," "I/we didn't take the advice and wish we had," "I/we took the advice and wish that we had not," "I/we did not take the advice and were glad that I/we did not", and so on. In an embodiment, a definitive resolution may not be required. For example, the participants may specify whether an issue was totally resolved, partially resolved, or not resolved. Once an issue has been closed, the audience or all users or members of the system may be permitted to review the results. Alternatively, the results may be kept private. Whether the results should be published to the audience and/or system members or users, or be kept private, may be a parameter which is specified by the participants in step 510.

In an embodiment, the participants may specify follow-up questions to be asked after an audience or audience member responds to the issue. The participant(s) may specify whether the follow-up questions are to be asked after each audience member votes, or after all audience members have voted (e.g., after the response period has ended). The participant(s) may also specify whether each follow-up question is mandatory or optional. In an embodiment, when the issue is a dispute, both the originating user and the opposing participant(s) can add follow-up questions, but the opponent can only specify optional follow-up questions, whereas the originating user can specify both mandatory and optional follow-up questions. For example, a user, seeking an opinion on whether he or she should quit a job voluntarily without a new job lined up, could ask a mandatory question of the members, such as: "Have you ever quit a job without a job lined up, and if so, did you regret it?" The results that are presented to the user can then be sorted by those who answered this question "yes" and those that answered it "no."

In an embodiment, participating audience member(s) may be given points or other credits for their participation. The credits may have some monetary, reputational, or other reward value. For example, the credits may allow a user or member to attain a change in status (e.g., from "public" to "juror" or from "juror" to "judge"). Additionally or alternatively, audience member(s) may be paid for their participation. The cost may be a system setting, a parameter specified by the participants to an issue (e.g., in step 510), and/or set by the audience member(s) themselves.

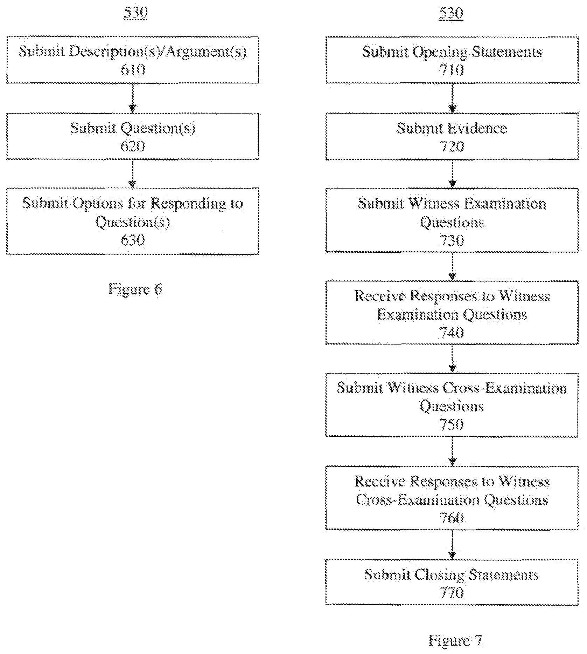

Fig. 6 illustrates one possible - and in some embodiments, selectable - process 530 for defining an issue. In step 610, the participant(s) of the issue may submit a description of the issue. The description may differ based on the type of issue. For instance, if the issue is a dispute, the description may comprise separate arguments submitted by opposing participants (e.g., a plaintiff and defendant). If the issue is a survey or opinion poll, the description may comprise background for the poll question(s) (e.g., an article, description of a current event, description of a product). If the issue is a minor dispute or a bet between friends, the description may comprise a simple story provided by a single participant. It should be understood that these are merely non-limiting examples, and that the description may take any of an infinite variety of forms.

In step 620, the participant(s) may submit one or more questions related to the description. It should be understood that these question(s) may comprise anything capable of being formed into a question, and may be defined in any format. In addition, in step 630, the participant(s) may define two or more answers for each of the question(s) defined in step 620. For example, as one illustrative, non-limiting example, a question may take the form of a multiple choice question, as are well-known in the fields of standardized testing and public opinion polls. In an embodiment, the participant(s) are also able to specify how many options can be chosen for each of the question(s). For example, the participant(s) may specify that only one option can be selected per respondent per question, "n" options per respondent per question, or all options per respondent per question. The system may also limit the number of characters that can be used to write an issue, describe the issue, write the options available for responding to the issue, write follow-up questions, and/or write comments.

In an embodiment, the description, questions, and/or options are optional, such that, in its simplest form, an issue may only comprise one or more questions, or a description and two or more options. Alternatively, the issue could comprise a description and question(s), question(s) and options, or a description, question(s), and options. It should be understood that, while steps 610, 620, and 630 are shown in a serial fashion, these steps may be performed in any order or simultaneously.

Fig. 7 illustrates another possible - and in some embodiments, selectable - process 530 for defining an issue. The process 530 illustrated in Fig. 7 is generally more formal and complex than the process 530 illustrated in Fig. 6. Specifically, the process 530 illustrated in Fig. 7 is akin to a trial, and thus, may be more suitable for non-trivial disputes, including, for example, legal disputes handled by courts, alternative dispute resolution, and other legal forums. Although the process 530 may be described in terms of multiple participants or a plaintiff and defendant, it should be understood that the process 530 may be utilized by one participant, two participants, or any other number of participants, and may be used in both an adversarial and non-adversarial setting. It should also be understood that, while steps 710, 720, the set of steps 730-760, and step 770 are shown in a serial fashion, these steps may be performed in any order or simultaneously.

In step 710, each participant - or alternatively, each opposing group of participants (e.g., a plaintiffs group and defendants group) - may submit an opening statement. The opening statement may take the form of an opening statement that would normally be given during a trial. However, the opening statements are not necessarily limited to any particular format or other constraint (although they may be, in some embodiments). The system may limit the number of characters that can be used in these features, including opening and closing statements, witness testimonies, cross-examinations, etc.

In step 720, each participant may submit evidence. For example, the participants may upload files comprising the evidence, including images, videos, documents, and the like. In some embodiments, both sides may accept or reject evidence, or object to evidence, submitted by the other side. Rejections or objections may be overruled or sustained by the audience, a particular audience member (e.g., judge), moderator, by one or more participants, or by other means. Alternatively, all evidence may be submitted to the audience.

Each participant may also identify one or more witnesses (e.g., by name, username, email address or other contact information). Invitations can be sent to the witnesses and accepted or declined in a similar or identical manner as described above in relation to the invitations sent to participants.

In step 730, each participant may submit questions for the witnesses. These questions may be open-ended questions or multiple choice questions, as described above. In an embodiment, in step 730, the participants may only submit questions for witnesses which they are proffering. In some embodiments, the questions may be constrained according to rules of evidence (e.g., restrictions on leading questions). The participants may also be permitted to accept, reject, or object to questions, in the same manner as described above in relation to evidence. Once the questions have been completed, and optionally agreed upon, the questions may be transmitted to the witnesses. This may occur either before or after a witness has accepted an invitation to be a witness in the issue. A time limit, such as a due date or duration, may be associated with the witness questions, such that witness responses must be received by a particular time in order to be made part of the issue definition.

In step 740, the witness responses are received by the system from the witnesses. Once all the witnesses who have agreed to participate have answered the submitted witness questions, or once the time for witness responses has ended, the participants may review the witness questions and, in step 750, submit cross-examination questions for each other's witnesses. Again, these questions may be constrained by the rules of evidence in some embodiments, and a timeframe may be specified in which the witnesses must respond to the cross-examination questions in order for the responses to be included in the issue definition. In step 760, the responses to the cross-examination questions are received by the system from the witnesses.

In step 770, each participant or group of participants may submit a closing statement. For instance, this may occur after each of the participants have had the opportunity to review all of the evidence and the witness responses to the examination and cross-examination questions. The parties may then acknowledge that they are ready for the audience. Alternatively, one or more or all of the steps of the process 530, in either Figs. 6 or 7, may occur in real time while the participants, witnesses, and/or audience member(s) are simultaneously communicatively connected with the system. For instance, the various submissions (e.g., opening and closing statements, evidence, witness responses) may be received and communicated in real time to the audience (e.g., jury, judge(s), combination of jury and judge(s)). In this manner, the issue can play out in real time much like a trial would.

Of course, it is not necessary that the process be performed in real-time. For example, the participants may submit all evidence, questions, and responses on their own time, and the audience may review their submissions and render a decision on their own time, although the participants and audience may be constrained by specified timeframes. In other embodiments, the process may comprise both real-time and non-real-time aspects. For instance, the case, including the presentation of evidence and witnesses, may be conducted in real-time, but the decision may be rendered by the audience at a later date and time. As another illustrative, non-limiting example, one or more of the submissions (e.g., witness responses) may be submitted beforehand, or all of the submissions may be submitted and finalized beforehand, but the submissions may be communicated to the audience while the participants and/or audience member(s) are simultaneously communicatively connected with the system.

For issues which utilize a judge as the audience, objections to evidence may be submitted to and either overruled or sustained by the judge. For example, in an embodiment in which the issue is played out in real time, a participant may use an input (e.g., button) of a user interface to indicate that he or she is objecting to a witness response, evidence, or statement. The participant may also specify the reason or basis for the objection. Where the audience includes both a judge and jury, the participants may be able to review and object to the evidence, and receive a ruling from the judge, prior to the evidence being displayed to the jury members. In non-real-time embodiments, the judge may be notified of any objections and overrule or sustain the objections on his or her own time. If the judge sustain an objection, the evidence in question may be removed from consideration, and may no longer be accessible to the participants or the judge.

In an embodiment, a judge (or other type of audience member) may ask questions to each of the participants, and receive responses to those questions. The participants may each see the questions sent to the other participant(s) and the answers received from the other participant(s), but, in an embodiment, may not be allowed to comment on those questions and answers, unless allowed by the judge. Besides issuing a ruling, a judge may also or alternatively propose a settlement. In an embodiment, the participants may have access to a settlement user interface, which allows the participants to negotiate a settlement and/or review the judge's ruling and/or settlement proposal. In an embodiment, members may buy a slot of the judge's time, and the price may vary based on the judge's experience level, popularity, availability, or other factors, as well as the length of time in court. The parties can specify a set date and time for their court date, as agreed upon, and then each be online on the system at that dedicated date and time.

### Jury Selection and Deliberation

Where the participant(s) select a jury audience, the system may implement a jury selection process. In one embodiment, the system may randomly invite users or members of the system to participate in the jury. Alternatively, the system may attempt to achieve a representative cross-section of members based on demographic information obtained for the members. The cross-section may be chosen to be representative of the members of the system, or of a geographical region (e.g., nation, state, county, city, or other locality or community) as determined from demographic information obtained through the system or from an external source, such as the U.S. Census. Additionally or alternatively, the jury may be selected from a subset of members meeting particular criteria specified by the participants or by the system. For example, the criteria may include, without limitation, the status of the users, how active the user is, prior experience, established expertise, feedback level, age, gender, voting history, geographic location, etc. In an embodiment, the jurors may be selected from a subset of members who have reached "juror" status, for example, based on their activity level on the system (e.g., how many responses they have submitted), feedback level, and/or other criteria.

The juror invitations may comprise the issue category and an option (e.g., link or other input) to accept or decline. As with the previously described invitations, if the invitee fails to respond to the invitation within a specified amount of time, the invitation may be treated as declined. If an invitee accepts the juror invitation, the invitee becomes a juror and may be assigned a virtual seat number or other identifier. In an embodiment, to maintain privacy and impartiality, the jurors' identities are withheld from the participants, and the participants' identities are withheld from the jurors.

If the participants specify that a simple majority is required for a verdict, the system can ensure that an odd number of jurors are seated. Alternatively, the system may always ensure that an odd number of jurors are seated, even if the participants specify that a unanimous verdict is required. In some embodiment, the participants may specify the number of jurors that should be seated, as well as the number or percentage of jurors required for a verdict.

In an embodiment, the participants may provide questions to the jury, and the jurors' responses may be provided to the participants. Alternatively or additionally, information about the jurors (e.g., demographic or personality information) may be provided to the participants. Based on this information, the participants may conduct a virtual voir dire. For instance, a user interface may be provided to the participants which provides a list or arrangement (e.g., to simulate a jury box) of jury members and their details. Each participant may be given a certain number of disqualifications, which can be utilized to remove a juror from the jury. For example, each participant may be permitted to remove up to three jurors from the jury. As jurors are removed, additional jurors may be inserted in their seats, and provided with the juror questions prepared by the participants. The process can be repeated until the specified or required number of jurors has been seated. In an embodiment, a number of alternates are also selected. For example, two alternate jurors may be selected in order to fill in, should a seated jury become unable to fulfill his or her duties, for example, in the online time frame.

In an embodiment, once a jury is seated, the case is played out in their presence. For example, opening statements, the submitted evidence, the witness examination and cross-examination questions, the witnesses' responses to those questions, and the closing statements are provided in one or more user interfaces to each of the jurors. The jurors may or may not be allowed to deliberate (e.g., using a chatroom), according to a system or participant-specified setting. If the jurors are permitted to deliberate, a time limit may be specified for the deliberations.

Once the case has been played out and, optionally, after the jurors have had a chance to deliberate, each juror may vote on the case. The participant receiving the majority of votes for an issue will win the case. As discussed above, what constitutes a majority may be specified by the participants beforehand, and may include a simple majority, unanimity, or other percentage or number of jurors. The results of the decision can be shown to the participants. In cases in which the participants have agreed to be bound by the decision of the jury, any escrowed money or property may be automatically disbursed to the winning participant.

Jurors may also be asked mandatory or optional follow-up questions, which may have been specified by the participants (e.g., to understand the jury's verdict) and/or by the system (e.g., to improve user experience).

### Anonymity

Disputes often involve sensitive or private material, and in order to encourage candor, the system may be designed to maintain a user's privacy for both registered and unregistered users. At registration, the system may require a user's real email address (or instant messaging address, online voice/video chat address, etc.), and, optionally, verification of this email address (e.g., by requiring the user to respond to an email sent to the email address). However, in an embodiment, the system shields this email address from other users. For example, the system may comprise a proprietary messaging system or utilize a third party messaging system to provide communications (e.g., text, media, video communications) between users of the system while maintaining the anonymity of the parties to the communication (e.g., using usernames, screen names, or aliases) when necessary or desired.

In some embodiments, additional user verification steps may also be performed as required, such as through driver's license data, credit card data, or other hard to counterfeit identification data to ensure system safety and, for example, to prevent unscrupulous users from signing up under multiple accounts and/or spoofing the system. However, this verification data will generally not be released to the general user base or to advertisers. Once registered and optionally verified, the system will generally either invite the user/member to either provide a username, screen name, or other alias. Additionally or alternatively, the system may automatically suggest or provide such an alias to the user. This alias will generally be changeable at the user's discretion, but the underlying user profile and/or user statistics will remain the same regardless of these name changes. For example, the system may internally maintain a constant and unique identification of the user, which may or may not be known to the user, and which can be associated and disassociated with aliases. In this manner, the user may be associated with multiple aliases at once and over time.

### Collaboration

Some issues, such as disputes, may involve more than one individual. These issues can be adversarial (e.g., alternative dispute resolution), non-adversarial (e.g., friends settling a bet, coworkers collaborating to define an issue for a focus group), or a combination of adversarial and non-adversarial (e.g., a sailing fleet, such as the J105 fleet, could use the system to resolve a protest or obtain the consensus view on a certain race tactic that has occurred or could potentially occur). In the case of non-adversarial issues, the system may allow more than one member to work on creating and editing the elements of the particular issue, including defining questions, defining options for responding to questions, selecting evidence, identifying witnesses, setting timeframes, selecting the audience, etc. Thus one member may login and create a first draft of the proposed issue, then electronically pass the issue to another member who can login and edit the issue, and pass it back again or pass it to yet another member. Additionally or alternatively, both members may edit different or the same elements of the issue simultaneously. These members may also annotate the description of the dispute with additional information, such as photographs, links to witnesses, testimony from witnesses, and so on.

In the case of adversarial disputes, each participating member may be able to define their own sets of elements of the issue. This may be an option provided to the originating user or other participants during the creation of the issue. For example, an originating member (e.g., plaintiff) may enter in his or her view of the issue. Other participating members - for example, defendants who have accepted the originating member's invitation to participate - may enter their own versions of the issue. Indeed the system may be designed to accommodate a different version of the issue for each participating member. Note that although plaintiff-defendant nomenclature may be used herein to discussing legal or quasi-legal issues, the systems and methods are, in fact, more general in purpose, and may be used for non-legal purposes, such as advice-giving purposes, community group purposes, and the like, described herein.

### Analytics

In order to provide good, if anonymous, demographic information for mediation selection, analysis, and advertiser purposes, registering users may be prompted to enter additional information, such as the user's age, gender, marital status, general location (e.g. country, state, county, city, or zip code), race, religion, educational status, income level, political affiliation, interests, hobbies, likes and dislikes, and so on. In addition, some users may ask follow-up questions, as discussed above, and that data may become part of the database and personality profile. In embodiments in which legal admissibility is required or desired, the user may not be asked for information such as race, religion, political affiliation, and the like. The information collected during registration and subsequent responses can be used to generate an initial user profile, which may comprise an initial personality profile.

In an embodiment, the system keeps track of each registered user's participations in issues. Additionally or alternatively, additional parameters derived from each registered user's participations in various online surveys may be tracked. For example, the system may maintain the number of issues that that member has participated in, as a participant (e.g., plaintiff, defendant), voter, jury member, judge, etc. The system may also keep track of the votes, decisions, opinions, preferences, or verdicts that the member has rendered, the resolutions of these issues, and/or a metric related to the quality of the member's votes, decisions, or verdict (e.g., based on feedback, such as a numeric rating of quality of decision, check box analysis (good, fair, bad), verbal comments, etc.). The system may also keep track of the type of issues that the member has previously participated in, the approximate geographic location where these issues originated, and so on. In this manner, the system may be used to recognize members who have acquired expertise in certain types of topics (e.g., automobile disputes, domestic disputes, workplace disputes, social issues, relationship issues, political issues, etc.).

The system may also build a profile of a member's personality, emotional status, and/or value system, such as whether or not the member is forgiving, prideful, stubborn, independent, inconsistent, and the like. These titles can also be selected by members to assign to other members based on the stories or issues they post. For example, in an embodiment, after responding to an issue, a member may be given an opportunity to select from a list of characteristics or descriptions that they feel are evident in the member that wrote the issue. The member who submitted the issue may be able to see, not only the responses, but the characteristics that members have assigned to them. For example, the originating user may be provided a bar chart illustrating that a certain percentage of members deemed the originating user as being stubborn in this scenario.

A user who has submitted an issue may take advantage of various statistical analysis programs and graphics programs provided by the system to analyze the responses received for the issue. For instance, the response data can be broken down by the respondents' age, gender, previous experience with this type of issue, answers to the mandatory or optional follow-up questions, and the like. Statistical analysis can be performed on the data and presented in one or more graphical forms (e.g., bar graphs, line graphs, pie charts, etc.).

The information may be used for advertising purposes. For instances, the issues may be categorized as to type (e.g., interests, specific problems with relationships, neighbors, automobiles, products, renting, purchases, etc.), as well as to geographic area (e.g., city, zip code, etc.). This information may be of specific interest to various local, regional, national, or international businesses that provide solutions to specific issues. For instance, an automobile accident dispute may be of interest to local auto repair shops, auto dealers, or insurance agencies. A domestic dispute may be of interest to local marriage counselors. Tenant-landlord issues may be of interest to local apartments, as well as to local real estate agents and legal firms, and so on. Other businesses, such as news stations, radio or television programs, websites, celebrity pages, sports teams, government entities, community groups, charity groups, etc., may be interested in the issues or may post their own issues or survey questions. In an embodiment, these entities can use the broad member base associated with the platform for a fee. For instance, a business or other entity could "sponsor" a story or issue, and use the results on their own sites, as well as provide a link (e.g., hyperlink) to the disclosed system from their own sites to collect feedback, rather than using their own member databases.

The system may thus generate revenues by, for example, selling the ability for advertisers to place text or graphic advertisements along with the various mediation web pages served up by the system. A particular advertiser may, for example, elect to purchase 1,000 ad impressions based on a set range of dispute topics or issues, within a particular geographic area, and going to members in a certain age range. In an embodiment, revenue may also be generated from businesses or groups using the system for feedback or survey results, as described above. Another source of revenue may be from members who are willing to pay for their issue to reach a larger audience through the system. For example, in an embodiment, the first X responses could be shown for free, but anything beyond that number may require the payment of a fee. There may also be fees to use juries, judges, escrow accounts, etc.

In an embodiment, the system can generate personality profiles based on the data collected from users and their participation in and responses to issues and/or survey questions. For example, and as previously discussed, a user's definition of issues and responses to issues and/or survey questions may be analyzed to determined characteristics of the user's personality, such as whether or not the user is compassionate, has a temper, is conservative or liberal, is serious or immature, has a sense of humor, is religious, etc. In an embodiment, the system may implement algorithms or modules to analyze the language utilized by a user (e.g., in defining an issue or responding to an issue), the trends in responses provided by the user, feedback about the user, how the user's language and responses compare to other users for whom personality characteristics are known, etc. In addition, algorithms can be built or utilized to assess how a member can be most positively impacted by the system, based on how they post their issues, respond to feedback, and answer others' posts. For example, a person who uses the phrases "I see" or "it looks like" in their descriptions of issues, responses, and/or feedback may be determined to be a visual person. Thus, it may be determined that this person responds better to members that provide issue descriptions, responses, and/or feedback in more visual ways. Issues, responses, and/or feedback can be sorted and ranked in terms of usefulness for each individual member, based on these types of algorithms.

It should be understood that these or additional characteristics of a user can be captured during the registration process as well, and that a user's responses to issues may be used to build on information acquired during registration of the user. For instance, user interfaces of the registration process may prompt the user to answer mandatory, optional, or a mix of mandatory and optional, questions. These questions may be targeted at acquiring personality characteristics of the user, much like questionnaires utilized by online dating websites, law enforcement agencies, the military, psychologists, and the like.

Personality profiles can be generated and maintained for each member of the system. Thus, the responses to an issue may be viewed according to both demographic and personality characteristics of the users. For example, a participant in an issue may be able to break up respondent data based on a variety of demographic and/or personality characteristics. As a simple, non-limiting example, a user may divide up responses based on whether the respondents are liberal or conservative, in order to determine whether the responses to an issue fall along partisan or non-partisan lines. As another simple example, a user may divide up responses to see whether compassionate members view an issue differently than relatively uncompassionate members. In this manner, users can see how different types of people respond to their posted issues.

In an embodiment, the system may also comprise algorithms or modules to analyze personality profiles and/or responses to issues over time to identify trends. For example, the system may identify changes in the levels of compassion, levels of political partisanship, religious attitude, and the like, as well as changes in public opinion about social, political, familial, or other types of issues.

### Use of Comments

In addition to voting, audience members for a particular issue may also be given the ability to provide comments regarding the issue. The member or members who authored the issue may be allowed to review the comments at any time, or only at specific times (e.g., after the voting period has closed). To preserve anonymity, the commenting members may use aliases, if they desire, or optionally all comments may be anonymous. Again, these aliases may be changed regularly by the member, or alternatively by the computer system. However, a member may choose to build his or her reputation by repeatedly using the same screen name or alias. Comments can be ranked based on algorithms, as discussed, to make them most useful to a particular member in terms of speaking a language that resonates with the member, such that the member can get the best solutions. This can engender member loyalty, and ensure that members continue returning to the platform.

In order to avoid offensive or unhelpful language, the system may employ one or more levels of moderation. In a first level of moderation, automatic text recognition software may scan the comments for improper words or phrases, or known variants of these improper words or phrases, as well as activity associated with elevated emotional states, such as comments comprising all capital letters. Additionally or alternatively, on an as-requested basis or other appropriate basis (e.g. randomly, according to previous history, and so on), human moderators may come in and delete or edit comments as appropriate. For example, members may have the ability to view and flag comments for administrative review. Community groups may select an administrator, who is responsible for all posts associated with that particular group.

### Binding Resolutions

In an embodiment, participants in an issue may be allowed or required to place something into an escrow account. If the issue can be resolved by money, this "something" may be money which is deposited into a financial account. Alternatively, it can be a physical object, such as a disputed item of property, which may be sent or mailed to a neutral repository for safe keeping until a resolution has been achieved. The account or repository may be managed by an operator of the system or by a third party, such as a financial institution, which may or may not be associated with the operator of the system. Based upon prior agreement, after the issue is ultimately resolved, including any optional previously agreed upon appeals, the system will then release or initiate release of the escrowed funds or property (e.g., by contacting the operator of the escrow account) to the winning party, or otherwise dispose of or distribute the escrowed funds or property as previously agreed upon by the participants.

### Specific Examples

In an embodiment, the system may implement a computerized method of mediating disputed issues. This method may comprise creating a mediation network based on one or more Internet servers (or alternatively placing the system on the "cloud"). These Internet servers may be based on one or more computer processors, such as the popular Intel or AMD x86 series of processors, computer memory (often RAM, Flash, or Disk drive memory), network connections to the Internet, and suitable operating system software such as Windows, UNIX, Linux, or other variant. The Internet server(s) will typically contain or be connected to data storage devices, often disk drives or flash memory, and in turn may control and manipulate one or more databases, often by way of database software such as MySQL or other software. The Internet servers will also often run web server software, such as Apache, and interact both with the various mediation network members by serving HTML-based webpages by way of various middleware such as PHP, Perl, Ruby, and the like.

The mediation network will typically comprise at least a membership database of a plurality of member individuals who are interested in participating in mediation activities. This membership database may, for example, contain at least the email addresses, usernames, passwords, aliases, ages, and genders of the various members. The database may also contain various member mediation experience counter(s), mediation history files, and approximate geographic locations of the various member individuals.

The mediation network may make at least the alias, age, gender, mediation experience counter, and mediation history file for the various member individuals publically available. This way, for example when a member logs in and is interested in selecting various other members for mediation assistance, the system may provide a directory of one or more web pages listing the various members by alias name, as well as this type of information. The system may then allow the member to sort through this directory and pick out, for example, other members that may have a high experience level, and a high success level, in mediating the particular type of dispute, issue, or problem of interest at that time. Alternatively, the system may assign mediators either randomly or according to an alternative predetermined scheme. In many embodiments, when mediators log in, the system may present them with a list of issues (e.g., by displaying a rolling list of issues, or by other presentation format). Here, mediators may choose to provide mediation assistance as desired. Mediators may also be prompted to provide input based upon their prior experience, as judged by the system.

In operation, a member may proceed to use the mediation system by, for example, entering a first set of facts related to a disputed issue (usually involving this member) into a web browser running in the graphical user interface of an Internet-connected computing device. To do this, the system may provide various webpages containing suitable check boxes, forms, and data entry locations, which enable the member to enter this information. The member can then use this web page to upload this first set of facts to an issue database connected to the Internet web server(s). This first set of facts can include human witness email links, telephone numbers, or other references, such as hyperlinks. If more than one member is involved in setting up the dispute or issue, the system may be configured to enable multiple members to collaborate, allowing both to enter and edit this first set of facts.

In some cases, more than one member may be involved in the issue or dispute, but these members may be on opposite sides of the issue or dispute, and neither may wish the other to access or edit his or her particular version of the facts. In this case, the system may be designed to handle such adversarial situations.

For example, the system may be designed to designate at least some of the members as plaintiff and other members as defendants. The system may then allow the first set of facts to be divided between a plaintiff set of facts and a defendant set of facts. The system may allow the plaintiff to edit the plaintiff set of facts, and allow the defendant to edit the defendant set of facts. After this is done, the system may then present both sets of facts to an audience, comprising a subset of other members, for subsequent mediation. The system can be designed to be flexible, and can have multiple categories of participating members, each with their own respective set of facts, and each with control over presenting their own respective set of facts, as needed.

In some embodiments, the mediation network may be affiliated with a pre-existing social network, such as Facebook^{™}, Twitter^{™}, MySpace^{™}, Google+^{™}, and the like. For example, the mediation network may be either linked to the preexisting social network, or run under the social network. Here, to preserve anonymity, only some data from the social network's database may be used, and other parts, such as identifiable names, may be suppressed. Thus, for example, a Facebook^{™} user in need of mediation services may click on a Facebook^{™} link to access the mediation network and have information (e.g., age, general geographic location) ported over to the mediation network, yet be confident that he or she could then resolve disputes in relative privacy, with the issues kept isolated from the rest of the user's social network, and only shared according to a level authorized by the user.

The web browser will typically be a standard web browser, such as Internet Explorer^{™}, Firefox^{™}, Chrome^{™}, Safari^{™}, and the like, often running on a standard computing device, such as a smart phone, desktop computer, laptop computer, tablet computer, and the like, which in turn is connected to the Internet via one or more wired or wireless communications links. This computing device will itself typically be made up of one or more computer processors, memories, display devices, user input devices (e.g., keyboards, mouse devices, touch sensitive screen devices, etc.) and suitable network connection(s). The device may run under the control of various operating system software such as Windows^{™}, Linux^{™}, Android^{™}, iOS^{™}, and the like.

The member can then solicit help regarding this issue by, for example, transmitting the existence of this disputed issue, via the mediation network's web server, to one or more mediation network members. As a result, when these recipients are logged in to the mediation network, these members can choose to participate in mediating the particular disputed issue.

In operation, assuming that at least one member chooses to participate in mediating this disputed issue, the mediation network may transmit this first set of facts to the relevant member(s), and invite these member(s) to transmit back (e.g., by entering data into a web page on the member's web browser) at least one mediation decision regarding this disputed issue. The mediation network will then keep track of this decision, and ultimately relay this decision, along with the decisions rendered by other mediation network member(s) back to the one or more originating members.

Alternatively, the facts may be presented so that the relevant audience member(s) may simply click on a response choice (e.g., accept facts, accept paragraph 1, reject paragraph 2, reject all facts, and so on) among several choices that are laid out either by the originating member, or by the system itself.

The mediation network may monitor the audience member(s) mediation participation by multiple means. For example, assuming the one or more members choose to enter their mediation decisions, in addition to transmitting these one or more mediation decisions back to the one or more originating members, the system may also store the decisions in its database for later statistical analysis. Additionally, the system may at least increment a mediation experience counter(s) associated with each audience member. Here, one or more mediation experience counters may be used. For example, the disputed issue may be assigned to one or more types, and there may be a different mediation experience counter assigned to each disputed issue type, as well as an overall accumulated mediation experience counter that keeps track of all mediation experiences.

In order to evaluate how successful the various second members are at mediating various types of disputed issues, the system may also allow the various originating members to enter in feedback regarding how satisfied the respective member(s) are with the mediation advice given. This may be done by having the mediation network web server(s) again serve up at least one evaluation web page to the web browser(s) of the various originating member(s), which will typically provide suitable checkboxes, radio buttons, sliders, text entry regions, numeric ratings, and so on, via which this feedback can be entered. The system may then assign this feedback information to the various participating audience members, for example, on a per disputed issue type basis. In this manner, a particular mediation network member, after mediating various disputed issues, might get an excellent feedback rating with regards to mediating auto repair problems, but a lower rating with regards to mediating personal or family disputes. Based on these ratings, other mediation network members may come to know that this particular individual may be a guru with respect to automobiles, but is probably best not consulted for delicate personal issues. Another individual may accumulate a reverse rating, and become recognized as very wise with respect to interpersonal problems, but not with respect to anything mechanical, and so on.

The mediation feedback will generally be stored in the mediation history file(s) that are associated with each member. The mediation feedback may also be stored and associated in the history files associated with the originating member as well, and optionally also either publically displayed, or at least displayed to potential members prior to accepting a mediation assignment from that particular originating member. This way, for example, if a particular first member has a history of giving low feedback for everything, the person might gradually acquire a reputation as being a difficult individual, and other members can take this into account when deciding whether or not to help this individual in various future mediation problems.

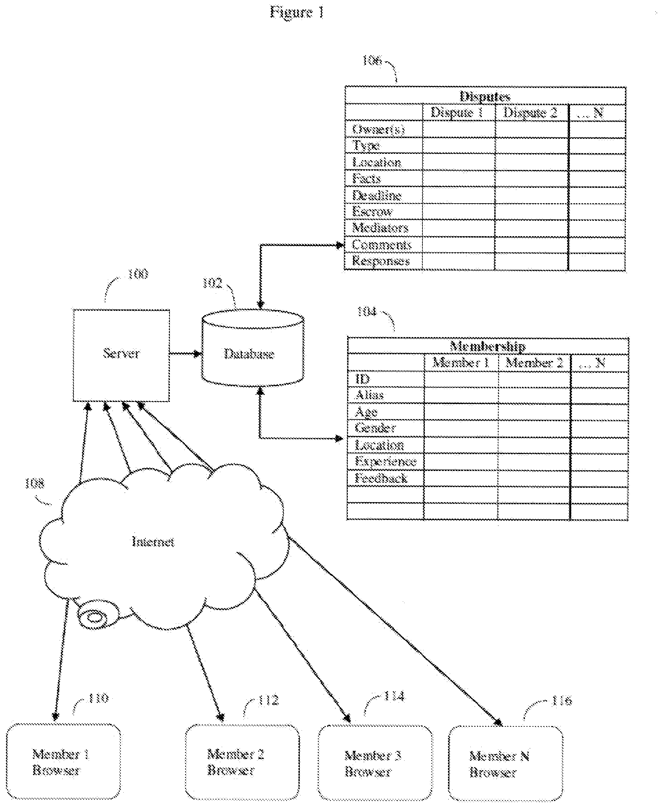

An example of some of the data flow involved in this example method is shown in Fig. 1. The mediation network software may be stored on Internet server 100, which in turn may be connected to database(s) 102. Database(s) 102, in turn, may store membership data pertaining to the various mediation network members 104 such as a member identifiers (e.g., email address, username, and/or other contact information such as phone numbers, social network link, etc.), aliases (e.g., screen name), age, gender, location, experience (e.g., broken down by dispute issue type), member mediation feedback (e.g., broken down by dispute issue type), and other information as desired. Database(s) 102 or other database(s) may also store dispute data 106 pertaining to the various ongoing and historical disputes or issues, including the dispute participants (i.e., the members that placed the dispute and issues onto the system in the first place), type of dispute, approximate location of the dispute, various dispute facts, any deadline or maximum number of responses set to mediate the dispute, funds or items placed in escrow pending dispute resolution, list of dispute mediators, comments regarding the dispute, and the various mediator dispute responses. Internet web server 100 can be connected to the Internet 108, and, through the Internet, make connections with various client devices, for example, through respective browser applications (110, 112, 114, 116) running on the devices, being operated by the various mediation network members.

The approximate location information associated with each member may be information such as the user's country, state, county, city, and/or zip code. In some embodiments, the system may request the member's complete address, but then only make the approximate location available to other users in order to preserve member anonymity. Alternatively, in some embodiments, the system will allow all users to a particular dispute to mutually identify themselves to other dispute participants as long as proper permissions are obtained. For instance, participants to a dispute may invite others to a dispute by, for example, exchanging an Internet link such as a URL, or by other means.

The first set of facts entered in by the originating member regarding a disputed issue can be almost anything. These facts can include text descriptions of the issue, photographs, videos, sound recordings, links to witnesses, witness statements, links to other websites or external data, and so on. In order to preserve anonymity, the system may optionally make use of various software filters, or moderators, or even human moderators, designed to screen the data for potentially sensitive information, such as identifiable names and addresses, and automatically redact such sensitive information according to mediation network system policies.

In order to move the mediation process along, the system may enable the members, who originated the disputed issue in the first place, to additionally set either a mediation response deadline or a minimum number of mediation acceptances needed to complete the mediation process for any given issue or dispute.

As previously discussed, the mediation network may provide one or more statistical analysis and/or graphical analysis software modules to enable the one or more originating members to analyze the various mediation decisions supplied by the various members responding to the particular issue or dispute. These statistical analysis tools and or graphical analysis tools will often be various software applications or modules, often residing on the mediation network's network server, which can process the members' mediation decisions that are stored in the mediation network database, and then transmit the analysis results to the originating members' web browsers.

These statistical analysis and/or graphical analysis software modules or tools may, for example, enable the various originating members to analyze the mediation decisions by any combination of the characteristics of the various audience members. For example, the data may be analyzed according to the audience members' ages, genders, mediation experience counters, mediation history files, or approximate geographical locations, as well as according to the audience member's answers to optional or mandatory questions.

Thus, for example, a user with a computer-related issue may find it useful to do an age sort (analysis) of the mediation data, often using statistical and graphical tools supplied by the mediation network system, and may find, for example, that filtering the mediation responses by age may produce better results if the feedback from older mediation network members is de-emphasized or discarded. By contrast, a user with a delicate personal problem to resolve may obtain better results by preferentially taking the mediation data from older mediation network members, and possibly taking the gender, mediation type experience, marital status and other audience members' characteristics into account as well.

In order to facilitate the mediation process, particularly when multiple audience members are assigned to a particular issue or dispute, in some embodiments, it may be useful to allow the various audience members to exchange comments, either between themselves, with the originating mediation member(s), or any combination of the two. As previously discussed, in order to maintain decorum, in some embodiments, the system may screen these comments for inappropriate words using an automated or human text checker. Algorithms may also be used to rank the comments to fit the personality profiles or preferred communication styles of a member.

Additionally, to facilitate mediation data analysis, it may be useful to provide the mediators with a preselected list of responses, so that mediators need merely check a particular response. Use of such a list can greatly facilitate the summation of results from multiple mediators. Such a preselected list of responses can be generated by a variety of means. For example, the originating user may generate the list of responses as part of the dispute description and set-up. Alternatively, the system may automatically generate a list of responses based, for example, on the type of dispute in question. As yet another alternative, the system may as an additional service allow a dispute initiator to request one or more human moderators to provide a list of responses for the dispute. As yet another alternative, the mediators may vote on what list of responses is most appropriate first, and then enter in their responses as a second step.

As previously discussed, in some embodiments, it may be useful to designate certain mediation network members with a mediation experience counter or a mediation history file that exceeds a preset limit as judges, at least within their particular mediation type category of expertise. These judges may be authorized by the mediation network to conduct mediation sessions between plaintiffs and defendants, or other combinations of members as desired. Mediation network members that have previous real-world legal, mediation, or counseling experience may be given extra credit in their mediation experience counter and/or mediation history file by the mediation system or mediation system moderators. This can help put the system on a sound footing.

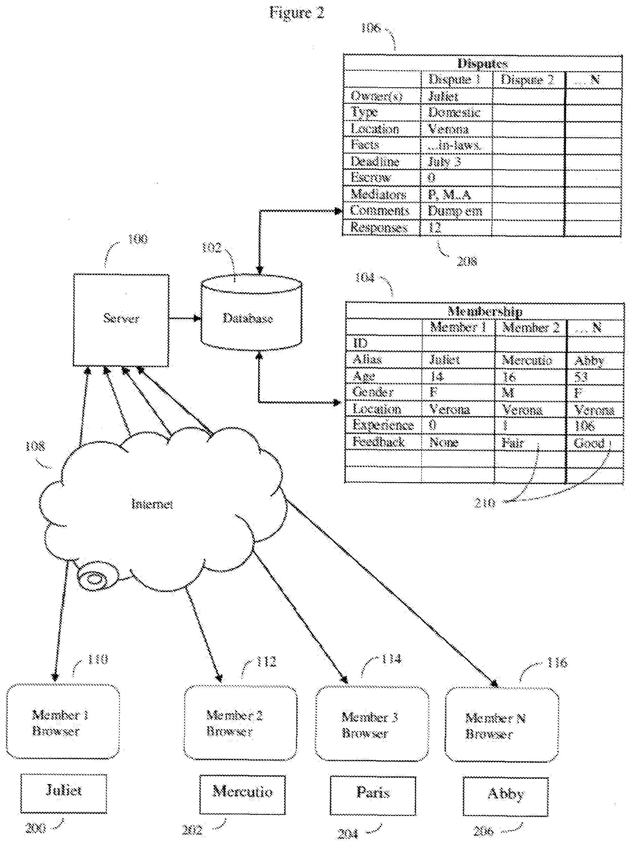

Fig. 2 shows an example of some of the data flows that can occur while the system is operating. In this example, a first member, going by the alias of "Juliet" (200), is asking the system to help resolve a domestic issue involving a fiancé and various relatives and in-laws. The various second members, who are available to help, include a second member with the alias "Mercutio" (202), another second member with the alias "Paris" (204), other second members, and an Nth second member using the alias "Abby" (206).

Juliet (200) may contact the mediation network through her web browser 110, and initiate Dispute 1 by sending back data to the web server 100 and database 102. The web server 100 and database 102 will update the dispute portion of the database 106 with the information that Dispute 1 is owned by Juliet. Juliet can further specify that the dispute involves a domestic issue type, and the location is the city of Verona. Juliet can further enter in other facts, such as that the dispute involves potential in-laws, that no money has been put in escrow, and the like.

Various second members, again usually operating under aliases, may be selected by Juliet or the system to help mediate the dispute. In this example, either Juliet or the system may have decided to select the members on the basis of location, so that all the second members have been chosen from the city of Verona. Here, various second members are helping to meditate this process, including one member with the alias "Mercutio" (202), another member with the alias "Paris" (204), other members, and an Nth member with the alias "Abby" (206).

The membership data associated with these members is shown in table 104. As can be seen, "Mercutio" is apparently a young man of 16 with no previous experience in these matters, the data for "Paris" is not shown, and the Nth second member is someone named "Abby," who is a middle aged woman with apparently substantial mediation experience in this area, and highly rated. The number of mediators selected (here N is assumed to be 12), their comments, and their respective responses are saved in the dispute database 106.

Once the time has expired, Juliet may then analyze her mediation results by using appropriate statistical and graphing software applications, for example, provided by web server 100, to analyze the mediation response data 208. For example, although the initial mediation response data may have been evenly divided with six out of twelve second mediators recommending the "get married and run off" option, and six out of twelver second mediators recommending the "you're too young, cool it, stay friends, and see what develops" option, when Juliet analyzes the data by age, she may see that when she selects an age 20 option as the cutoff, most of the "get married and run off" responses are being selected by mediators under 20, while most of the "you're too young, cool it, stay friends, and see what develops" responses are being chosen by mediators over 20. She may also see that the responses from mediators with a high feedback rating follow similar lines. In addition, she might have utilized the mandatory or optional questions features, where she might have asked the members to answer: "At what age did you get married?" She would be able to see the results broken out by that answer. The system software, for example, running on web server 100, can send suitable graphics to Juliet's web browser 110 to help her visualize the various options. Juliet can then make her determination of what advice is best, and provide feedback ratings to the various participating members 210 regarding their recommendations in this case.

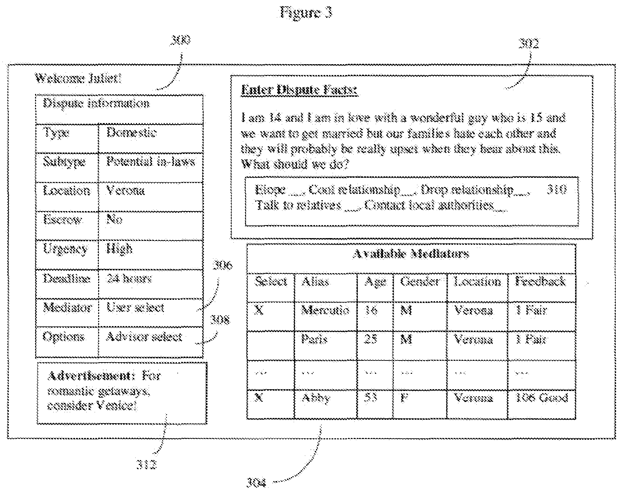

Fig. 3 shows an example of a screenshot of a user interface for entering dispute information. As illustrated, Juliet from Fig. 2 is in the process of entering in her basic dispute information (300, 302), and selecting from a list of available mediators 304. In this example, in the basic dispute information, Juliet has entered in the type of dispute (domestic), a subtype (potential in-laws), a location (Verona), if there is an escrow amount involved (no), urgency (high), and time required for dispute mediation (24 hours). Juliet has also elected to manually select the mediators from a mediator list 306 rather than have the system suggest mediators for her. Juliet has also requested that a system advisor (either a human advisor or an automated algorithm) select a list of responses 310 for her.

As the example above suggests, the system may provide more than one way to select mediators for a dispute. In some embodiments, the dispute participants may elect to hand-select mediators based upon available mediator information. In other embodiments, the system itself may select the mediators, either randomly or else based on a selection process. For example, in one type of selection process, when mediators log in, the system may scroll or otherwise display a list of disputes to the mediators, and the first "n" mediators that show an interest in a particular dispute will be selected by the system to mediate the dispute. Alternatively, all users that are online and choose to answer may be included. Many other mediator selection schemes may also be used.

Fig. 3 also shows an example of an advertisement 312. Use of such advertisements can help the system operator operate as a low-cost or free service. As previously discussed, the system may use basic dispute information such as dispute type and location to offer up potentially relevant advertisements.

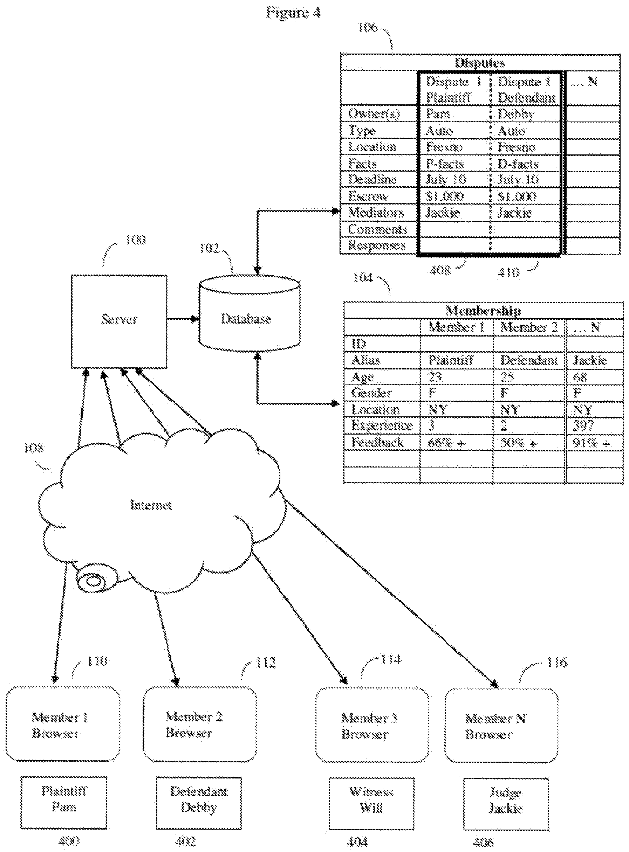

Fig. 4 shows an example snapshot of a system managing a "small claims court" issue. In this example, two women, going by the aliases of "Pam" and "Debby" are disputing the $1,000 insurance deductible charges for a minor "fender bender" accident, which was only partially witnessed by a witness with the alias name of "Will". The facts of the situation are in dispute such that the two cannot agree on liability, and thus, are turning to the mediation network to help resolve the problem.

In this example, Pam (400), who may have suffered the auto damage in this case, may open the dispute by uploading data through her web browser 110, Internet 108, and web server 100 to database 102. Pam (400) has opened the dispute as a plaintiff, and uploaded the type of dispute (automobile), the approximate location of the accident (Fresno California), her version of the facts, and the deadline for resolving the facts 408. Debby (402), who may not have suffered damage, but who Pam (400) thinks is responsible for the accident, and if so may owe Pam (400) the $1,000 deductible payment, may have previously agreed to mediate the dispute using the mediation network. Here, Debby (402) has also agreed to put her $1,000, that is potentially owed to Pam (400), into an escrow account that will be held by the system or by a third party escrow service. The system allows Debby (402) to upload her version of the facts to database 102 using web browser 112, Internet 108, and web server 100.

Pam (400) and/or Debby (402) can upload information such as photos of the scene of the accident, damage to the car and so on, as well as a link to any witnesses willing to testify. In this example, one of them has added a link to witness Will (404), who is willing to participate through his web browser 114. Unlike some of the other examples, which used a panel of multiple audience members, Pam (400) and Debby (402) have agreed to put the case before a highly experienced mediation network member Jackie (406). Jackie (406), as indicated by her membership data, has accumulated a significant amount of experience (397 relevant cases) and a high level (91+%) of positive feedback. Member Jackie (406) has thus been given the rank of "Judge" by the system, and is thus authorized to mediate disputes by herself. This may be a feature for which users are required to pay.

In this case, Pam (400), Debby (402), Jackie (406), and Will (400) can agree to either hold the mediation session online at a given time, or else handle the mediation over a period of time as each log in to the system. Here Jackie (406) may review the plaintiff's version of the facts, review the defendant's version of the facts, send questions to witness Will (404), ask additional questions to Pam (400) and Debby (402) as needed, and finally render a decision. Depending upon how the system is set up, Jackie (406) may additionally be empowered to release the funds from escrow to whoever prevails in this particular case.

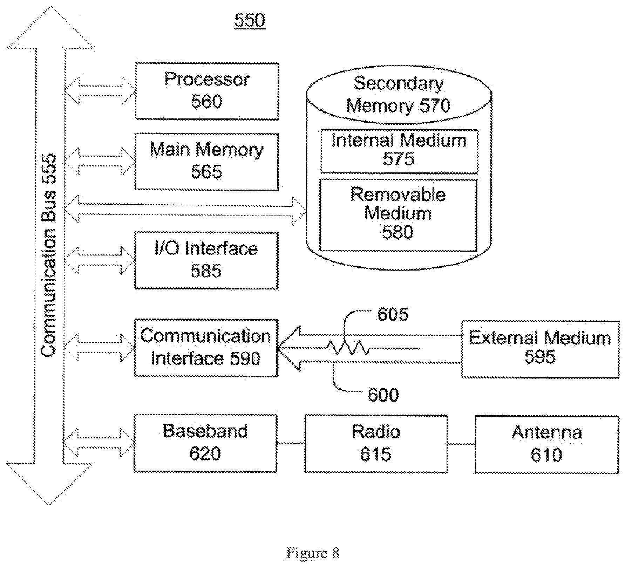

Fig. 8 is a block diagram illustrating an example wired or wireless system 550 that may be used in connection with various embodiments described herein. For example the system 550 may be used as or in conjunction with one or more of the mechanisms and processes previously described above. The system 550 can be a server or any conventional personal computer, or any other processor-enabled device that is capable of wired or wireless data communication. Other computer systems and/or architectures may be also used, as will be clear to those skilled in the art.

The system 550 preferably includes one or more processors, such as processor 560. Additional processors may be provided, such as an auxiliary processor to manage input/output, an auxiliary processor to perform floating point mathematical operations, a special-purpose microprocessor having an architecture suitable for fast execution of signal processing algorithms (e.g., digital signal processor), a slave processor subordinate to the main processing system (e.g., back-end processor), an additional microprocessor or controller for dual or multiple processor systems, or a coprocessor. Such auxiliary processors may be discrete processors or may be integrated with the processor 560.

The processor 560 is preferably connected to a communication bus 555. The communication bus 555 may include a data channel for facilitating information transfer between storage and other peripheral components of the system 550. The communication bus 555 further may provide a set of signals used for communication with the processor 560, including a data bus, address bus, and control bus (not shown). The communication bus 555 may comprise any standard or non-standard bus architecture such as, for example, bus architectures compliant with industry standard architecture ("ISA"), extended industry standard architecture ("EISA"), Micro Channel Architecture ("MCA"), peripheral component interconnect ("PCI") local bus, or standards promulgated by the Institute of Electrical and Electronics Engineers ("IEEE") including IEEE 488 general-purpose interface bus ("GPIB"), IEEE 696/S-100, and the like.

System 550 preferably includes a main memory 565 and may also include a secondary memory 570. The main memory 565 provides storage of instructions and data for programs executing on the processor 560, such as one or more of the modules discussed above. The main memory 565 is typically semiconductor-based memory such as dynamic random access memory ("DRAM") and/or static random access memory ("SRAM"). Other semiconductor-based memory types include, for example, synchronous dynamic random access memory ("SDRAM"), Rambus dynamic random access memory ("RDRAM"), ferroelectric random access memory ("FRAM"), and the like, including read only memory ("ROM").

The secondary memory 570 may optionally include a internal memory 575 and/or a removable medium 580, for example a floppy disk drive, a magnetic tape drive, a compact disc ("CD") drive, a digital versatile disc ("DVD") drive, etc. The removable medium 580 is read from and/or written to in a well-known manner. Removable storage medium 580 may be, for example, a floppy disk, magnetic tape, CD, DVD, SD card, etc.

The removable storage medium 580 is a non-transitory computer readable medium having stored thereon computer executable code (i.e., software) and/or data. The computer software or data stored on the removable storage medium 580 is read into the system 550 for execution by the processor 560.

In alternative embodiments, secondary memory 570 may include other similar means for allowing computer programs or other data or instructions to be loaded into the system 550. Such means may include, for example, an external storage medium 595 and an interface 570. Examples of external storage medium 595 may include an external hard disk drive or an external optical drive, or and external magneto-optical drive.

Other examples of secondary memory 570 may include semiconductor-based memory such as programmable read-only memory ("PROM"), erasable programmable read-only memory ("EPROM"), electrically erasable read-only memory ("EEPROM"), or flash memory (block oriented memory similar to EEPROM). Also included are any other removable storage media 580 and communication interface 590, which allow software and data to be transferred from an external medium 595 to the system 550.

System 550 may also include a communication interface 590. The communication interface 590 allows software and data to be transferred between system 550 and external devices (e.g. printers), networks, or information sources. For example, computer software or executable code may be transferred to system 550 from a network server via communication interface 590. Examples of communication interface 590 include a modem, a network interface card ("NIC"), a wireless data card, a communications port, a PCMCIA slot and card, an infrared interface, and an IEEE 1394 fire-wire, just to name a few.

Communication interface 590 preferably implements industry promulgated protocol standards, such as Ethernet IEEE 802 standards, Fiber Channel, digital subscriber line ("DSL"), asynchronous digital subscriber line ("ADSL"), frame relay, asynchronous transfer mode ("ATM"), integrated digital services network ("ISDN"), personal communications services ("PCS"), transmission control protocol/Internet protocol ("TCP/IP"), serial line Internet protocol/point to point protocol ("SLIP/PPP"), and so on, but may also implement customized or non-standard interface protocols as well.

Software and data transferred via communication interface 590 are generally in the form of electrical communication signals 605. These signals 605 are preferably provided to communication interface 590 via a communication channel 600. In one embodiment, the communication channel 600 may be a wired or wireless network, or any variety of other communication links. Communication channel 600 carries signals 605 and can be implemented using a variety of wired or wireless communication means including wire or cable, fiber optics, conventional phone line, cellular phone link, wireless data communication link, radio frequency ("RF") link, or infrared link, just to name a few.

Computer executable code (i.e., computer programs or software) is stored in the main memory 565 and/or the secondary memory 570. Computer programs can also be received via communication interface 590 and stored in the main memory 565 and/or the secondary memory 570. Such computer programs, when executed, enable the system 550 to perform the various functions of the present invention as previously described.

In this description, the term "computer readable medium" is used to refer to any non-transitory computer readable storage media used to provide computer executable code (e.g., software and computer programs) to the system 550. Examples of these media include main memory 565, secondary memory 570 (including internal memory 575, removable medium 580, and external storage medium 595), and any peripheral device communicatively coupled with communication interface 590 (including a network information server or other network device). These non-transitory computer readable mediums are means for providing executable code, programming instructions, and software to the system 550.

In an embodiment that is implemented using software, the software may be stored on a computer readable medium and loaded into the system 550 by way of removable medium 580, I/O interface 585, or communication interface 590. In such an embodiment, the software is loaded into the system 550 in the form of electrical communication signals 605. The software, when executed by the processor 560, preferably causes the processor 560 to perform the inventive features and functions previously described herein.

The system 550 also includes optional wireless communication components that facilitate wireless communication over a voice and over a data network. The wireless communication components comprise an antenna system 610, a radio system 615 and a baseband system 620. In the system 550, radio frequency ("RF") signals are transmitted and received over the air by the antenna system 610 under the management of the radio system 615.

In one embodiment, the antenna system 610 may comprise one or more antennae and one or more multiplexors (not shown) that perform a switching function to provide the antenna system 610 with transmit and receive signal paths. In the receive path, received RF signals can be coupled from a multiplexor to a low noise amplifier (not shown) that amplifies the received RF signal and sends the amplified signal to the radio system 615.

In alternative embodiments, the radio system 615 may comprise one or more radios that are configured to communicate over various frequencies. In one embodiment, the radio system 615 may combine a demodulator (not shown) and modulator (not shown) in one integrated circuit ("IC"). The demodulator and modulator can also be separate components. In the incoming path, the demodulator strips away the RF carrier signal leaving a baseband receive audio signal, which is sent from the radio system 615 to the baseband system 620.

If the received signal contains audio information, then baseband system 620 decodes the signal and converts it to an analog signal. Then the signal is amplified and sent to a speaker. The baseband system 620 also receives analog audio signals from a microphone. These analog audio signals are converted to digital signals and encoded by the baseband system 620. The baseband system 620 also codes the digital signals for transmission and generates a baseband transmit audio signal that is routed to the modulator portion of the radio system 615. The modulator mixes the baseband transmit audio signal with an RF carrier signal generating an RF transmit signal that is routed to the antenna system and may pass through a power amplifier (not shown). The power amplifier amplifies the RF transmit signal and routes it to the antenna system 610 where the signal is switched to the antenna port for transmission.

The baseband system 620 is also communicatively coupled with the processor 560. The central processing unit 560 has access to data storage areas 565 and 570. The central processing unit 560 is preferably configured to execute instructions (i.e., computer programs or software) that can be stored in the memory 565 or the secondary memory 570. Computer programs can also be received from the baseband processor 610 and stored in the data storage area 565 or in secondary memory 570, or executed upon receipt. Such computer programs, when executed, enable the system 550 to perform the various functions of the present invention as previously described. For example, data storage areas 565 may include various software modules (not shown).

Various embodiments may also be implemented primarily in hardware using, for example, components such as application specific integrated circuits ("ASICs"), or field programmable gate arrays ("FPGAs"). Implementation of a hardware state machine capable of performing the functions described herein will also be apparent to those skilled in the relevant art. Various embodiments may also be implemented using a combination of both hardware and software.

Furthermore, those of skill in the art will appreciate that the various illustrative logical blocks, modules, circuits, and method steps described in connection with the above described figures and the embodiments disclosed herein can often be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a module, block, circuit or step is for ease of description. Specific functions or steps can be moved from one module, block or circuit to another without departing from the invention.

Moreover, the various illustrative logical blocks, modules, and methods described in connection with the embodiments disclosed herein can be implemented or performed with a general purpose processor, a digital signal processor ("DSP"), an ASIC, FPGA or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

Additionally, the steps of a method or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium including a network storage medium. An exemplary storage medium can be coupled to the processor such the processor can read information from, and write information to, the storage medium. In the alternative, the storage medium can be integral to the processor. The processor and the storage medium can also reside in an ASIC.

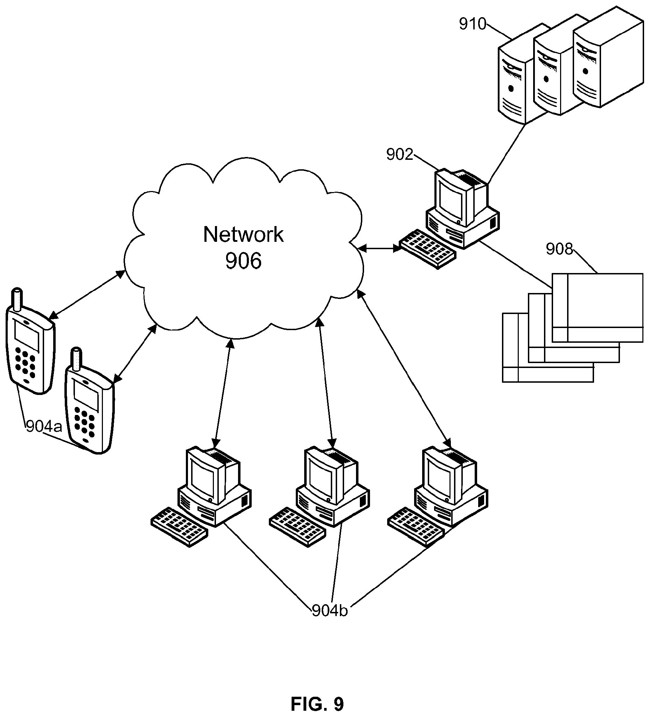

System 550 can for example form the basis of server system 902 included in issue resolution system 900 illustrated in Fig. 9. As can be seen, members 904, which can include mobile members 904a and non-mobile members 904b can be interfaced with server system 902 via a network 906 such as the Internet. Server system 902 can be configured to serve up web pages through which members 904 can access the features described above. Server system 902 can also be configured to store user profiles, issue archives, group affiliations, etc. (collectively 908), as well to run the algorithms and programs encompassed by the algorithms described above (collectively 910). In that sense, server system 902 can be said to include an analytics engine(s) configured to perform the functions described above.

The above description of the disclosed embodiments is provided to enable any person skilled in the art to make or use the invention. Various modifications to these embodiments will be readily apparent to those skilled in the art, and the generic principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.
The following clauses, which are not clauses, define optional or preferred features of the present invention.
Clause 1. A method for network-based issue resolution, the method comprising, by at least one hardware processor:
   receiving from a user a selection of a type of audience from a plurality of types of audiences;
   receiving a definition of an issue;
   identifying one or more audience members corresponding to the selected type of audience;
   providing the definition of the issue to the one or more audience members;
   receiving one or more responses from the one or more audience members; and
   determining a resolution for the issue based on the one or more responses.
2. The method of Clause 1, further comprising:
   inviting one or more participants; and
   receiving an acceptance from at least one of the one or more participants;
   wherein receiving the definition of the issue comprises
   receiving a first portion of the definition of the issue from the user, and
   receiving a second portion of the definition of the issue from the at least one participant.
3. The method of Clause 1, wherein the provision of the definition of the issue to the one or more audience members is performed in real time while a device of each of the user, the at least one participant, and the one or more audience members is in electronic communication with one or more servers comprising the at least one hardware processor.
4. The method of Clause 1, further comprising:
   inviting one or more witnesses;
   receiving an acceptance from at least one of the one or more witnesses;
   providing one or more witness questions to the at least one witness; and
   receiving responses to the witness questions from the at least one witness.
5. The method of Clause 1, wherein both the first portion and the second portion of the definition comprise one or more of:
   an opening statement;
   evidence;
   one or more of the one or more witness questions; and
   a closing statement.
6. The method of Clause 1, further comprising:
   generating a personality profile for each of the one or more audience members, wherein the personality profile comprises one or more personality characteristics associated with the audience member; and
   updating the personality profile for each of the one or more audience members based on the received one or more responses from the one or more audience members, one or more issues received from the respective audience member, and one or more resolutions of the one or more issues received from the respective audience member.
7. The method of Clause 1, wherein the plurality of types of audience members comprise a public type, a jury type, and a judge type, wherein the public type comprises any of a plurality of users, the jury type comprises a panel comprising a selected subset of two or more of the plurality of users, and the judge type comprises one or more of the plurality of users associated with an earned status or experience level.
8. The method of Clause 1, further comprising receiving an indication of whether or not the determined resolution was followed.
9. The method of Clause 1, further comprising:
   receiving at least one property to be escrowed; and
   distributing the at least one property based on the determined resolution.
10. The method of Clause 1, wherein identifying one or more audience members corresponding to the selected type of audience comprises:
   for each of a plurality of members, analyzing responses to one or more surveys based on at least one personality algorithm; and
   selecting the one or more audience members from the plurality of members based on the analysis.
11. A system for network-based issue resolution, the system comprising:
   at least one hardware processor; and
   at least one executable software module that, when executed by the at least one hardware processor,
   receives from a user a selection of a type of audience from a plurality of types of audiences,
   receives a definition of an issue,
   identifies one or more audience members corresponding to the selected type of audience,
   provides the definition of the issue to the one or more audience members,
   receives one or more responses from the one or more audience members, and
   determines a resolution for the issue based on the one or more responses.
12. The system of Clause 11, wherein the at least one executable software module further:
   invites one or more participants; and
   receives an acceptance from at least one of the one or more participants;
   wherein receiving the definition of the issue comprises
   receiving a first portion of the definition of the issue from the user, and
   receiving a second portion of the definition of the issue from the at least one participant.
13. The system of Clause 12, wherein the provision of the definition of the issue to the one or more audience members is performed in real time while a device of each of the user, the at least one participant, and the one or more audience members is in electronic communication with the system.
14. The system of Clause 12, wherein the at least one executable software module further:
   invites one or more witnesses;
   receives an acceptance from at least one of the one or more witnesses;
   provides one or more witness questions to the at least one witness; and
   receives responses to the witness questions from the at least one witness.
15. The system of Clause 14, wherein both the first portion and the second portion of the definition comprise one or more of:
   an opening statement;
   evidence;
   one or more of the one or more witness questions; and
   a closing statement.
16. The system of Clause 11, wherein the at least one executable software module further:
   generates a personality profile for each of the one or more audience members, wherein the personality profile comprises one or more personality characteristics associated with the audience member;
   updates the personality profile for each of the one or more audience members based on the received one or more responses from the one or more audience members, one or more issues received from the respective audience member, or one or more resolutions of the one or more issues received from the respective audience member;
   receives a plurality of comments from the one or more audience members; and
   ranks the plurality of comments based on one or more personality profiles for the one or more audience members.
17. The system of Clause 11, wherein the plurality of types of audience members comprise a public type, a jury type, and a judge type, wherein the public type comprises any of a plurality of users, the jury type comprises a panel comprising a selected subset of two or more of the plurality of users, and the judge type comprises one or more of the plurality of users associated with an earned status.
18. The system of Clause 11, wherein the at least one executable software module further receives an indication of whether or not the determined resolution was followed.
19. The system of Clause 11, wherein the at least one executable software module further:
   receives at least one property to be escrowed; and
   distributes the at least one property based on the determined resolution.
20. The system of Clause 11, wherein identifying one or more audience members corresponding to the selected type of audience comprises:
   for each of a plurality of members, analyzing responses to one or more surveys based on at least one personality algorithm; and
   selecting the one or more audience members from the plurality of members based on the analysis.
21. A server system configured to store user profiles for a plurality of users, the server system comprising:
   a web server configured to serve a plurality of web pages through which users can access the system, create a user profile, create and post issues, receive feedback from other users on the issues, and respond to other users issues;
   an analytics engine configured to automatically build or add to the user profile based on at least one of the issues the user creates, the language the user uses in creating the issue, how the user responds to other user's issues, the language used in such responses, and what action the user takes in response to the received feedback; and
   an analyzer program configured to allow the user to group feedback from other users based on information in the user profile.

## Claims

1. A computerized method of mediating disputed issues, said method comprising:
creating a mediation network comprising a membership database of a plurality of member individuals interested in participating in mediation activities, said membership database comprising at least, for each of the plurality of member individuals, email addresses, login identification, passwords, aliases, ages, genders, a mediation experience counter, a mediation history file, wherein the mediation history file includes types of issues involved in mediation experience, a number of times a mediation decision submitted by the member individual was selected, the number of times a mediation decision submitted by the member individual was not selected, when selected, whether the mediation decision was in fact followed, and an approval score whether member individuals who selected and followed the mediation decisions was happy with the result, and approximate locations of said plurality of member individuals, said membership database connected to at least one Internet web server;
making at least said alias, age, gender, mediation experience counter, and mediation history file for said plurality of member individuals publicly available on said mediation network;
presenting a graphical user interface in a web browser of an internet connected device to first member of the plurality of member individual, the user interface comprising a facts area in which the first member individual can enter a first set of facts related to a disputed issue involving the first member (dispute member) individual and a dispute information area in which the first member can enter dispute information, and uploading said first set of facts and dispute information to an issue database connected to an Internet web server;
transmitting the existence of said disputed issue to the web browser of at least one second member (mediation member) individual, based on the data in the membership database of the at least one second member, so that when said at least one second member individual is logged in to said mediation network, said at least one second member individual can choose to participate in mediating said disputed issue,
wherein if said at least one second member individual chooses to participate in mediating said disputed issue, said mediation network presenting via the graphical user interface an available mediators area comprising information related to the at least one second member individual, the information comprising a combination of at least some of an alias, age, gender, location and feedback;
receiving via the available mediators area of the graphical user interface a selection of the at least one member individual;
transmitting said first set of facts to said at least one second member, and invites said at least one second member to transmit back at least one mediation decision to said at least one first member individual,
wherein if said at least one second member individual chooses to enter said mediation decision, transmitting said at least one mediation decision back to said at least one first member individual for display in an area or web page of the graphical user interface, and incrementing the mediation experience counter(s) associated with said at least one second member;
providing at least one feedback web page as part of the graphical user interface to said at least one first member wherein said at least one first member may enter in feedback relating to the quality or success of said mediation decision into the mediation history file(s) associated with said at least one second member; and
update the approval score of the at least one second member based on the feedback.

2. The method of claim 1, wherein said approximate locations comprises one or more location information data selected from the group consisting of country, state, county, city, and zipcode information.

3. The method of claim 1 or claim 2, wherein said first set of facts comprises one or more facts selected from the group consisting of text descriptions and photographs.

4. The method of claim 1 or claim 2 or claim 3, wherein said at least one first member individual can additionally set a mediation response deadline via the dispute information are of the graphical user interface or a minimum number of second member mediation responses deadline.

5. The method of any preceding claim, wherein said mediation database additionally provides one or more statistical analysis and/or graphical analysis software modules to enable said at least one first member individual to analyze said at least one mediation decision according to said age, gender, mediation experience counter, mediation history file, or approximate geographical location of said at least one second member(s).

6. The method of any preceding claim, wherein said at least one second member(s) may exchange comments between said at least one first member individual and other said at least one second member(s), and in which said comments are automatically screened for inappropriate words using an automated or human text checker.

7. The method of any preceding claim, wherein:
i) if said at least one first member comprises more than one first members, said first members may both enter and edit said first set of facts related to said disputed issue, via corresponding graphical user interfaces, prior to transmitting said first set of facts to said at least one second member(s); and/or
ii) said at least one first member may further include human witness email links, telephone numbers, or other hypertext links in said first set of facts.

8. The method of any preceding claim, wherein said Internet web server either:
i) presents a list of disputes to said at least one second member(s), and said at least one second members select said disputed issue from said list of disputes and elect to participate in mediating said disputed issue; and/or
ii) provides a list of suggested dispute mediation responses to said at least one second member(s), and said at least one second member(s) enter their mediation response by selecting at least one element from said list of suggested dispute mediation responses.

9. The method of any preceding claim, wherein if said at least one first member comprises more than one first members, and at least some of said first members comprise plaintiff first members (plaintiff dispute members) and defendant first members (defendant dispute members) who cannot agree on said first set of facts, then providing for said first set of facts to be divided between a plaintiff first set of facts and a defendant first set of facts, allowing said plaintiff first members to edit said plaintiff first set of facts, allowing said defendant first members to edit said defendant first set of facts, and presenting both said plaintiff first set of facts and defendant first set of facts to said least one second members.

10. The method of claim 9, wherein:
i) said mediation network members with a mediation experience counter or a mediation history file that exceeds a preset limit are designated by the mediation network as judges, and said judges are authorized by said mediation network to conduct mediation sessions between said plaintiff first members and said defendant first members; and optionally or preferably, wherein mediation network members with real world legal, mediation, or counseling experience are given extra credit in their mediation experience counter and/or mediation history file; or
ii) wherein said plaintiff first members and/or said defendant first members place funds in a escrow account, and said escrow account is released upon receiving said mediation decision.

11. The method of any preceding claim, wherein said mediation network limits said at least one first member individuals to a preset number of disputed issues that have not received mediation decisions.

12. The method of any preceding claim, wherein said age, gender, approximate geographic location, and type of mediation issue are provided to advertisers, said advertisers upload advertising media to said mediation network, and said mediation network transmits said advertising media to mediation network members, via corresponding graphical user interfaces, that meet advertiser specified criteria for age, gender, approximate geographic location, and type of mediation issue.

13. The method of any preceding claim, wherein said membership database is obtained from a social network membership database, and said mediation network is linked to and is accessible from a social network.

14. The method of any preceding claim, wherein said first member individuals may additionally post questions to at least some of said mediation network members, and receive question responses from said at least some of said mediation network members.

15. The method of any preceding claim, wherein :
i) the dispute information area of the graphical user interface allows the first member individual to request a list of mediation decisions, and wherein the graphical user interface further comprises a decisions area that displays the suggested decisions; and/or
ii) the feedback included in the available mediators area includes the approval score for each of the at least one second members.
